(19) Europäisches Patentamt
European Patent Office
Office européen des brevets

(11) **EP 4 190 505 A1**

(12) **EUROPÄISCHE PATENTANMELDUNG**

(43) Veröffentlichungstag:
**07.06.2023 Patentblatt 2023/23**

(21) Anmeldenummer: **21211571.1**

(22) Anmeldetag: **01.12.2021**

(51) Internationale Patentklassifikation (IPC):
***B25F 5/00*** *(2006.01)*

(52) Gemeinsame Patentklassifikation (CPC):
**B25F 5/006; H01M 10/651**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Hartmann, Markus**
**87665 Mauerstetten (DE)**
• **Kondratiuk, Jens**
**9470 Buchs (CH)**
• **Holubarsch, Markus**
**86899 Landsberg am Lech (DE)**
• **Stanger, Robert**
**87600 Kaufbeuren (DE)**
• **Richter, Rene**
**86199 Augsburg (DE)**

(74) Vertreter: **Hilti Aktiengesellschaft**
**Corporate Intellectual Property**
**Feldkircherstrasse 100**
**Postfach 333**
**9494 Schaan (LI)**

(54) **SYSTEM, DAS EINE WERKZEUGMASCHINE UND EINE ENERGIEVERSORGUNGSVORRICHTUNG UMFASST, SOWIE ENERGIEVERSORGUNGSVORRICHTUNG**

(57) Die vorliegende Erfindung betrifft ein System (100) umfassend eine Werkzeugmaschine (10) und eine Energieversorgungsvorrichtung (20), wobei die Energieversorgungsvorrichtung (20) zur Versorgung der Werkzeugmaschine (10) mit elektrischer Energie vorgesehen ist. Die Energieversorgungsvorrichtung kann über eine Schnittstelle (30) lösbar mit der Werkzeugmaschine (10) verbunden werden, wobei die Schnittstelle (30) mindestens einen weiblichen Kontaktpartner (40) und einen männlichen Kontaktpartner (50) umfasst. Die Schnittstelle (30) weist einen elektrischen Gesamtübergangswiderstand pro Pol (22, 24) von kleiner als 0,4 Milliohm, bevorzugt kleiner als 0,3 Milliohm und besonders bevorzugt kleiner 0,2 Milliohm auf. Darüber hinaus kann die Schnittstelle (30) mehr als sechs, bevorzugt mehr als acht und am meisten bevorzugt mehr als zwölf Einzelkontaktpunkte (46) aufweisen. In einem zweiten Aspekt betrifft die Erfindung eine Energieversorgungsvorrichtung (20) zur Verwendung in dem vorgeschlagenen System (100).

Fig. 1

EP 4 190 505 A1

## Beschreibung

Die vorliegende Erfindung betrifft ein System umfassend eine Werkzeugmaschine und eine Energieversorgungsvorrichtung, wobei die Energieversorgungsvorrichtung zur Versorgung der Werkzeugmaschine mit elektrischer Energie vorgesehen ist. Die Energieversorgungsvorrichtung kann über eine Schnittstelle lösbar mit der Werkzeugmaschine verbunden werden, wobei die Schnittstelle mindestens einen weiblichen Kontaktpartner und einen männlichen Kontaktpartner umfasst. Die Schnittstelle weist einen elektrischen Gesamtübergangswiderstand pro Pol von kleiner als 0,4 Milliohm, bevorzugt kleiner als 0,3 Milliohm und besonders bevorzugt kleiner als 0,2 Milliohm auf. Darüber hinaus kann die Schnittstelle pro Pol mindestens sechs, bevorzugt mindestens acht und am meisten bevorzugt mindestens zwölf Einzelkontaktpunkte aufweisen. In einem zweiten Aspekt betrifft die Erfindung eine Energieversorgungsvorrichtung zur Verwendung in dem vorgeschlagenen System.

## Hintergrund der Erfindung:

Sogenannte kabellose Werkzeugmaschinen, wie beispielsweise Akku-Schrauber, Bohrmaschinen, Sägen, Schleifgeräte, oder dergleichen, können zur Energieversorgung mit einer Energieversorgungsvorrichtung verbunden werden. Die Energieversorgungsvorrichtung kann beispielsweise als Akkumulator ("Akku") ausgebildet sein oder einen solchen umfassen. Akkumulatoren weisen üblicherweise eine Vielzahl an Energiespeicherzellen auf, auch Akku-Zellen genannt, mit deren Hilfe elektrische Energie aufgenommen, gespeichert und wieder abgegeben werden kann. Wenn der Akkumulator mit einer Werkzeugmaschine verbunden ist, kann die in den Energiespeicherzellen gespeicherte elektrische Energie an die Verbraucher (z.B. ein bürstenloser Elektromotor) der Werkzeugmaschine zugeführt werden. Zum Aufladen, d.h. Befüllen der Energiespeicherzellen mit elektrischer Energie, wird der Akkumulator mit einer Ladevorrichtung, wie einem Ladegerät, verbunden, sodass elektrische Energie zu den Energiespeicherzellen gelangen kann.

Zukünftige Batterietechnologien werden durch eine hohe Lebensdauer und hohe Entladeströme gekennzeichnet sein. Das heißt, dass die Ströme, die von der Energieversorgungsvorrichtung an die Werkzeugmaschine übertragen werden soll, werden höher sein als bisher, und auch die Lebensdauern der Energieversorgungsvorrichtung werden sich im Vergleich zu aktuellen Energieversorgungsvorrichtungen verlängern. Eine besondere technische Herausforderung stellt insbesondere die Schnittstelle zwischen Werkzeugmaschine und Energieversorgungsvorrichtung dar. An der Schnittstelle sind die elektrischen Kontakte der Werkzeugmaschine und die elektrischen Kontakte der Energieversorgungsvorrichtung ("Kontaktpartner") so miteinander verbunden, dass die in den Energiespeicherzellen gespeicherte elektrische Energie von dem Ackumulator zu der Werkzeugmaschine gelangen kann.

Um den erhöhten mechanischen und/oder elektrischen Anforderungen dieser zukünftigen Batterietechnologien zu begegnen, besteht die Aufgabe der vorliegenden Erfindung darin, ein System aus Werkzeugmaschine und Energieversorgungsvorrichtung, sowie eine Energieversorgungsvorrichtung bereitzustellen, mit denen die Leistungsdichte der Schnittstelle verbessert und ihre Lebensdauer verlängert werden kann. Insbesondere würde es die Fachwelt begrüßen, wenn mit der Schnittstelle höhere Ströme als bisher von der Energieversorgungsvorrichtung an die Werkzeugmaschine übertragen werden könnten und wenn die Schnittstelle eine optimale Ausnutzung der zukünftigen Batterietechnologien ermöglichen würde.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

## Beschreibung der Erfindung:

Erfindungsgemäß ist ein System umfassend eine Werkzeugmaschine und eine Energieversorgungsvorrichtung zur Versorgung der Werkzeugmaschine mit elektrischer Energie, wobei die Energieversorgungsvorrichtung über eine Schnittstelle lösbar mit der Werkzeugmaschine verbindbar ist, wobei die Schnittstelle mindestens einen weiblichen Kontaktpartner und einen männlichen Kontaktpartner umfasst, wobei die Schnittstelle einen elektrischen Gesamtübergangswiderstand pro Pol von kleiner als 0,4 Milliohm, bevorzugt kleiner als 0,3 Milliohm und besonders bevorzugt kleiner als 0,2 Milliohm. Indem der elektrischen Gesamtübergangswiderstand der Schnittstelle pro Pol auf einen Wert unter 0,4 Milliohm, bevorzugt unter 0,3 Milliohm und besonders bevorzugt unter 0,2 Milliohm abgesenkt wird, kann ein System bereitgestellt werden, mit dem überraschend hohe Ströme von der Energieversorgungsvorrichtung in Richtung der Werkzeugmaschine übertragen werden können. Dabei handelt es sich vorzugsweise um Konstant-Ströme in einer Größenordnung von mehr als 50 Ampère (A), bevorzugt von mehr als 70 A, am meisten bevorzugt von mehr als 100 A handeln. Dadurch kann eine leistungsstarke bzw. leistungsfähige Energieversorgungsvorrichtung optimal ausgenutzt werden und die in ihr gespeichert elektrische Energie optimal und die Werkzeugmaschine übertragen werden. Es hat sich gezeigt, dass die vorgeschlagene Schnittstelle besonders robust und langlebig ist, so dass sie den hohen elektrischen und mechanischen Belastungen, die mit zukünftigen Zelltechnologien einhergehen können, gerecht wird und eine optimale Ausnutzung dieser zukünftigen Zelltechnologien ermöglicht. Die Reduzierung des elektrischen Gesamtübergangswiderstands führt vorteilhafterweise zu einer erhöhten Stromtragfähigkeit der Schnittstelle, so dass mit der Erfindung Werkzeugmaschinen in größeren Leistungsklassen, d.h. besonders leistungsstarke Werkzeugmaschinen, betrieben bzw. mit elektrischer Energie versorgt werden können. Die Verringerung der Verlustleistung im Übergangswiderstand kann vorteilhafterweise zu einer reduzierten thermischen Belastung der umgebenden Bauteile führen. Insbesondere Bauteile aus thermoplastischem Material können dadurch wirksam vor Beschädigungen durch zu große Wärmeeinwirkung geschützt werden.

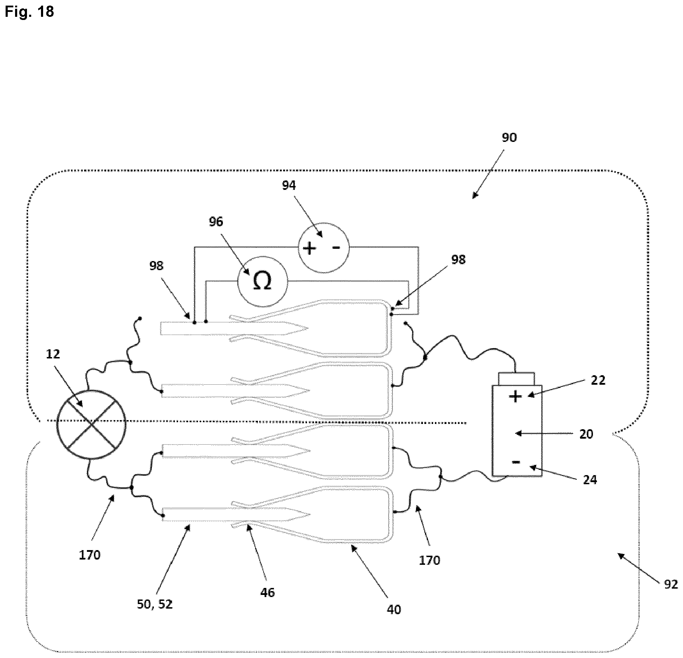

Die Formulierung, dass im Kontext der vorliegenden Erfindung der «elektrische Gesamtübergangswiderstand pro Pol» gemessen wird, bedeutet im Sinne der Erfindung bevorzugt, dass der elektrische Gesamtübergangswiderstand in einer der beiden Stromrichtungen des Systems aus Werkzeugmaschine und die Energieversorgungsvorrichtung gemessen wird. Vorzugsweise besteht ein erster Strompfad zwischen dem Pluspol der Energieversorgungsvorrichtung und der Werkzeugmaschine, insbesondere einem Verbraucher innerhalb der Werkzeugmaschine, und ein zweiter Strompfad zwischen der Werkzeugmaschine, insbesondere einem Verbraucher innerhalb der Werkzeugmaschine, und dem Minuspol der Energieversorgungsvorrichtung. Der Verlauf der Strompfade ist beispielsweise in Fig. 18 dargestellt. Es ist im Sinne der Erfindung bevorzugt, dass der Pluspol der Energieversorgungsvorrichtung als Kathode bezeichnet wird, während der Minuspol der Energieversorgungsvorrichtung als Anode bezeichnet wird. Somit besteht der erste Strompfad vorzugsweise zwischen der Kathode der Energieversorgungsvorrichtung und dem Verbraucher der Werkzeugmaschine und der zweite Strompfad zwischen dem Verbraucher der Werkzeugmaschine und der Anode der Energieversorgungsvorrichtung. In dem in Fig. 18 dargestellten Ausführungsbeispiel wird beispielsweise der elektrische Gesamtübergangswiderstand der Schnittstelle in dem ersten Strompfad gemessen, der im oberen Bereich der Figur abgebildet ist. Dabei wird vorzugsweise der elektrische Gesamtübergangswiderstand zwischen dem Pluspol der Energieversorgungsvorrichtung und der Werkzeugmaschine gemessen. Zur Messung des elektrischen Gesamtübergangswiderstand wird vorzugsweise ein Ohm-Meter verwendet, sowie eine vorzugsweise dazu parallel geschaltete Mess-Stromversorgungsvorrichtung. Das Ohm-Meter stellt vorzugsweise ein Messgerät für den elektrischen Widerstand dar, wobei es vorzugsweise dazu eingerichtet ist, auch die besonders geringen elektrische Gesamtübergangswiderstände zu erfassen, die im Kontext der vorliegenden Erfindung auftreten. Das Ohm-Meter wird daher bevorzugt auch als Widerstandsmessgerät bezeichnet. Die Mess-Stromversorgungsvorrichtung kann vorzugsweise eine Stromquelle umfassen oder von einer Stromquelle gebildet werden. Die Mess-Stromversorgungsvorrichtung ist vorzugsweise dazu eingerichtet, einen Strom abzugeben, wobei im Kontext der vorliegenden Erfindung beispielsweise ein Strom in Höhe von 1 Ampère von der Mess-Stromversorgungsvorrichtung abgegeben wird.

Es ist im Sinn der Erfindung bevorzugt, dass die Werkzeugmaschine und die Energieversorgungsvorrichtung als «Verbindungspartner der Schnittstelle» bezeichnet werden. Vorzugsweise weisen die Verbindungspartner der Schnittstelle jeweils mindestens einen Kontaktpartner auf, wobei es im Sinne der Erfindung besonders bevorzugt ist, dass jeder Verbindungspartner der Schnittstelle mehr als einen Kontaktpartner aufweist. Die Kontaktpartner können als weibliche oder als männliche Kontaktpartner ausgebildet sein, wobei je ein weiblicher und ein männlicher Kontaktpartner ein Stromübertragungs-Paar bilden können. Wenn beispielsweise jeder Verbindungspartner der Schnittstelle zwei bevorzugt zueinander korrespondierende Kontaktpartner umfasst, können beispielsweise zwei Stromübertragungs-Paare gebildet werden. Der Begriff «korrespondierend» wird im Sinne der Erfindung so verstanden, dass ein weiblicher Kontaktpartner mit einem männlichen Kontaktpartner korrespondiert, weil der eine weibliche und der eine männliche Kontaktpartner dazu eingerichtet sind, miteinander ein Stromübertragungs-Paar zu bilden. Beispielsweise können die Kontaktpartner als Steckkontakte ausgebildet sein, die ineinandergesteckt werden können. Insbesondere kann ein Schwert des männlichen Kontaktpartners in eine Aufnahmeklemme des weiblichen Kontaktpartner eingeführt werden. Selbstverständlich sind auch andere Verbindungsverfahren im Kontext der vorliegenden Erfindung bevorzugt. Es ist im Sinne der Erfindung bevorzugt, die Kontaktpartner der Verbindungspartner der Schnittstelle als Leistungskontakte zu bezeichnen, um sie von Kommunikationskontakten oder -elementen abzugrenzen. Während die Leistungskontakte dazu eingerichtet sind, elektrische Energie zu übertragen, vorzugsweise von der Energieversorgungsvorrichtung in Richtung der Werkzeugmaschine, können die Kommunikationskontakte oder -elemente dazu eingerichtet sein, Daten zwischen den Verbindungspartnern der Schnittstelle auszutauschen.

Es ist im Sinne der Erfindung bevorzugt, dass die Werkzeugmaschine und die Energieversorgungsvorrichtung je eine Gruppe von Kontaktpartnern aufweisen. Beispielsweise kann die Energieversorgungsvorrichtung eine Gruppe oder Anzahl von weiblichen Kontaktpartnern aufweisen, während die Werkzeugmaschine eine Gruppe oder Anzahl von männlichen Kontaktpartnern aufweist. Selbstverständlich kann die Anordnung der Kontaktpartner auch «andersherum» gestaltet sein, d.h. dass die Werkzeugmaschine eine Gruppe von weiblichen Kontaktpartnern aufweist, während die Energieversorgungsvorrichtung eine Gruppe von männlichen Kontaktpartnern aufweist. Es kann im Sinne der Erfindung auch bevorzugt sein, dass die Werkzeugmaschine und die Energieversorgungsvorrichtung «gemischte» Gruppen von Kontaktpartnern aufweisen, d.h. sowohl weibliche und männliche Kontaktpartner. Wenn die Werkzeugmaschine oder die Energieversorgungsvorrichtung beispielsweise vier Kontaktpartner aufweist, können beispielsweise zwei oder drei Kontaktpartner als männliche Kontaktpartner ausgebildet sein und die anderen Kontaktpartner als weibliche Kontaktpartner.

Es ist im Sinne der Erfindung bevorzugt, dass die Verbindungspartner der Schnittstelle, d.h. die Werkzeugmaschine und die Energieversorgungsvorrichtung, eine korrespondierende Anzahl von Kontaktpartnern aufweist. Das bedeutet im Sinne der Erfindung bevorzugt, dass die Werkzeugmaschine und die Energieversorgungsvorrichtung eine gleiche Anzahl von Kontaktpartnern aufweisen. Wenn beispielsweise die Werkzeugmaschine vier männliche Kontaktpartner aufweist, kann es im Sinne der Erfindung bevorzugt sein, dass die Energieversorgungsvorrichtung ebenfalls vier Kontaktpartner, in diesem Fall vorzugsweise vier weibliche Kontaktpartner, aufweist. In diesem Ausführungsbeispiel der Erfindung können vier Stromübertragungs-Paare gebildet werden, mit denen elektrische Energie von der Energieversorgungsvorrichtung an die Werkzeugmaschine übertragen werden kann. Es kann im Sinne der Erfindung allerdings ebenso gut bevorzugt sein, dass sich die Anzahl der Kontaktpartner der Werkzeugmaschine und die Anzahl der Kontaktpartner der Energieversorgungsvorrichtung unterscheiden. In diesem Ausführungsbeispiel der Erfindung kann die Werkzeugmaschine beispielsweise vier männliche und die Energieversorgungsvorrichtung zwei weibliche Kontaktpartner aufweisen. Beim Verbinden der Energieversorgungsvorrichtung mit der Werkzeugmaschine werden dann vorzugsweise lediglich zwei Stromübertragungs-Paare gebildet, mit denen elektrische Energie von der Energieversorgungsvorrichtung an die Werkzeugmaschine übertragen werden kann. Vorzugsweise bleiben in diesem Ausführungsbeispiel der Erfindung zwei männliche Kontaktpartner der Werkzeugmaschine unbenutzt bzw. leer, da sie nicht belegt werden und diesem Ausführungsbeispiel der Erfindung nicht zur Übertragung der elektrischen Energie von der Energieversorgungsvorrichtung an die Werkzeugmaschine beitragen. Es kann im Sinne der Erfindung auch bevorzugt sein, dass die Werkzeugmaschine zwei männliche und die Energieversorgungsvorrichtung vier weibliche Kontaktpartner aufweist. In diesem Ausführungsbeispiel der Erfindung bleiben dann im Verbindungsfall zwei weibliche Kontaktpartner der Energieversorgungsvorrichtung ungenutzt bzw. unbelegt, so dass sie in diesem Ausführungsbeispiel der Erfindung nicht zur Übertragung der elektrischen Energie von der Energieversorgungsvorrichtung an die Werkzeugmaschine beitragen.

Es ist im Sinn der Erfindung bevorzugt, dass die Schnittstelle pro Pol der Energieversorgungsvorrichtung mindestens sechs, bevorzugt mindestens acht und am meisten bevorzugt mindestens zwölf Einzelkontaktpunkte aufweist. Die Erfinder haben erkannt, dass der elektrische Gesamtübergangswiderstand der Schnittstelle des vorgeschlagenen Systems insbesondere dadurch reduziert werden kann, indem eine hohe Anzahl von Einzelkontaktpunkten zwischen den weiblichen und männlichen Kontaktpartnern der Schnittstelle bereitgestellt wird. Es ist im Sinne der Erfindung bevorzugt, dass die Anzahl der Einzelkontaktpunkte der Schnittstelle dadurch erhöht werden kann, dass der mindestens eine weibliche Kontaktpartner mehr als einen Schenkel aufweist, wobei die Schenkel der weiblichen Kontaktpartner im Sinne der Erfindung bevorzugt auch als «Kontaktarme» bezeichnet werden können. In diesem Ausführungsbeispiel der Erfindung ist es bevorzugt, dass der mindestens eine weibliche Kontaktpartner der Schnittstelle pro Pol mindestens sechs, bevorzugt mindestens acht und am meisten bevorzugt mindestens zwölf Einzelkontaktpunkte aufweist, beispielsweise indem der weibliche Kontaktpartner mehrere Schenkel bzw. Kontaktarme aufweist.

Es kann im Sinne der Erfindung auch bevorzugt sein, dass je ein männlicher Kontaktpartner und ein weiblicher Kontaktpartner ein Stromübertragungs-Paar bilden, wobei das mindestens eine Stromübertragungs-Paar der Schnittstelle pro Pol mindestens sechs, bevorzugt mindestens acht und am meisten bevorzugt mindestens zwölf Einzelkontaktpunkte aufweist. Es kann im Sinne der Erfindung darüber hinaus bevorzugt sein, dass an jedem Verbindungspartner der Schnittstelle mehr als ein Kontaktpartner bzw. mehr als ein Leistungskontakt vorgesehen ist. Dann können beispielsweise zwei, drei, vier, fünf oder mehr Stromübertragungs-Paare aus je einem weiblichen und einem männlichen Kontaktpartner gebildet werden, wobei die höhere Anzahl von Stromübertragungs-Paaren vorteilhafterweise dazu führt, dass mehr elektrische Energie von der Energieversorgungsvorrichtung an die Werkzeugmaschine übertragen werden kann. Darüber hinaus kann die höhere Anzahl von Stromübertragungs-Paaren dazu führen, dass höhere Ströme von der Energieversorgungsvorrichtung an die Werkzeugmaschine übertragen werden können. Dabei handelt es sich vorzugsweise um Konstant-Ströme in einer Größenordnung von mehr als 50 Ampère (A), bevorzugt von mehr als 70 A, am meisten bevorzugt von mehr als 100 A.

Die Erfinder haben erkannt, dass die Stromtragfähigkeit weiter verbessert werden kann, wenn mindestens einer der Kontaktpartner eine erste Beschichtung aufweist, wobei ein Silberanteil der ersten Beschichtung in Masseprozent in einem Bereich von größer als 70 %, bevorzugt in einem Bereich von größer als 95 % liegt. Die Vorsehung der ersten Beschichtung kann vorteilhafterweise dazu führen, dass der elektrische Gesamtübergangswiderstand der Schnittstelle des vorgeschlagenen Systems im Vergleich zu Schnittstellen mit unbeschichteten Kontaktpartnern weiter reduziert werden kann, so dass die Leistungsfähigkeit der Energieversorgungsvorrichtung noch besser ausgenutzt werden kann. Tests haben gezeigt, dass Beschichtungen, die einen Silberanteil in Masseprozent in einem Bereich von größer als 70 %, bevorzugt größer als 95 %, aufweisen, besonders gut dazu geeignet sind, den elektrischen Gesamtübergangswiderstand der Schnittstelle überraschend stark zu reduzieren und somit die Leistungsdichte der Schnittstelle weiter zu verbessern. Beispielsweise kann die erste Beschichtung Silber oder Silbergraphit umfassen, ohne darauf beschränkt zu sein.

Es ist im Sinn der Erfindung bevorzugt, dass die erste Beschichtung im Bereich der Einzelkontaktpunkte vorliegt. Der Begriff «Einzelkontaktpunkt» wird im Sinne der Erfindung bevorzugt so verstanden, dass damit diejenigen Punkte oder Bereich der Kontaktpartner gemeint sind, die im Verbindungsfall mit einem Kontaktpartner in Kontakt vorliegen, um elektrische Energie zu übertragen. Gemeint sind mit dem Begriff vorzugsweise die lokalen Berührstellen zwischen den Kontaktpartnern, die über einen eigenen federnden Kontaktarm auf den Gegenpartner, beispielsweise das Schwert des männlichen Kontaktpartners, gedrückt werden. Die Kontaktpunkte können dabei als Berührpunkte, Berührlinien oder auch Berührflächen ausgebildet sein. Wie beispielsweise auch aus den Figuren hervorgeht, weisen die weiblichen Kontaktpartner üblicherweise zwei Schenkel oder Kontaktarme auf, die im Verbindungsfall das Schwert des männlichen Kontaktpartners umschließen. Wenn der weibliche Kontaktpartner zwei Schenkel oder Kontaktarme aufweist, die den männlichen Kontaktpartner jeweils an genau einer Stelle berühren, weist das entsprechende Stromübertragungs-Paar vorzugsweise zwei Einzelkontaktpunkte auf. Wenn jeder der beiden Kontaktarme des weiblichen Kontaktpartners in zwei Einzelarme unterteilt ist und die Einzelarme den männlichen Kontaktpartner jeweils an genau einer Stelle berühren, so weist das entsprechende Stromübertragungs-Paar vorzugsweise vier Einzelkontaktpunkte auf. Die Angabe der Einzelkontaktpunkte erfolgt im Kontext der vorliegenden Erfindung vorzugsweise ebenfalls pro Pol. Das bedeutet im Sinne der Erfindung bevorzugt, dass sich die Anzahl der Einzelkontaktpunkte ergibt aus der Anzahl der Kontaktpartner pro betrachtetem Pol und der Anzahl der Einzelkontaktpunkte dieser Kontaktpartner. Beispielsweise kann die Anzahl der Einzelkontaktpunkte in dem ersten Strompfad ermittelt werden, indem zunächst die Anzahl der Kontaktpartner bzw. Stromübertragungs-Paare festgestellt wird, die mit dem Pluspol, d.h. der Kathode der Energieversorgungsvorrichtung verbunden sind. Beispielsweise kann der Pluspol, d.h. der Kathode der Energieversorgungsvorrichtung mit zwei Kontaktpartnern verbunden vorliegen, wobei die zwei Kontaktpartner zwei Stromübertragungs-Paare bilden können. Die weiblichen Kontaktpartner der Stromübertragungs-Paare, die mit dem Pluspol der Energieversorgungsvorrichtung verbunden sind, weisen je zwei Kontaktarme auf, wobei diese Kontaktarme beispielsweise jeweils in vier Einzel-Kontaktarme unterteilt sein können. Dann weist jedes einzelne Stromübertragungs-Paar acht Einzelkontaktpunkte auf (vier pro Kontaktarm, insgesamt acht) und die Anzahl der Einzelkontaktpunkte pro Pol - hier für den Pluspol - beträgt in diesem Ausführungsbeispiel der Erfindung sechzehn, weil zwei weibliche Kontaktpartner mit dem Pluspol der Energieversorgungsvorrichtung verbunden vorliegen. Mit anderen Worten weist der erste Strompfad, der in diesem Beispiel untersucht wird, sechzehn Einzelkontaktpunkte pro Pol auf. Der Begriff «Verbindungsfall» beschreibt vorzugsweise den Zustand, in dem die Energieversorgungsvorrichtung mit der Werkzeugmaschine verbunden vorliegt, so dass elektrische Energie bzw. Strom von der Energieversorgungsvorrichtung an die Werkzeugmaschine übertragen werden kann. Vorzugsweise liegt die erste Beschichtung zumindest im Bereich der Einzelkontaktpunkte der Kontaktpartner vor. Die erste Beschichtung kann darüber hinaus auch an anderen Stellen der Kontaktpartner vorliegen.

Es ist im Sinn der Erfindung bevorzugt, dass mindestens einer der Kontaktpartner eine zweite Beschichtung aufweist, wobei ein Nickelanteil der zweiten Beschichtung in Masseprozent in einem Bereich von größer als 83 % liegt. Die zweite Beschichtung ist vorzugsweise dazu eingerichtet, eine Haftung der ersten Beschichtung auf einem Grundmaterial des Kontaktpartners zu verbessern. Die zweite Beschichtung kann somit vorteilhafterweise zur Untervernickelung der Kontaktpartner verwendet werden. Vorzugsweise liegt die zweite Beschichtung somit zwischen dem Grundmaterial und der ersten Beschichtung angeordnet vor. Das Grundmaterial des Kontaktpartner, der mit der ersten und/oder der zweiten Beschichtung versehen wird, kann vorzugsweise ein gut leitfähiges Material sein, wie beispielsweise Kupfer. Vorzugsweise können die erste und/oder die zweite Beschichtung auf dieses Grundmaterial aufgebracht werden, wobei vorzugsweise zunächst eine zweite Beschichtung auf das Grundmaterial aufgebracht werden kann, um den Grundstein für eine gute Haftung der anschließend aufzubringenden ersten Beschichtung zu legen. Tests haben gezeigt, dass Beschichtungen, die einen Nickelanteil in Masseprozent in einem Bereich von größer als 83 % aufweisen, besonders gut zur Haftungsverbesserung zwischen dem Grundmaterial des Kontaktpartners und der ersten Beschichtung bzw. dem ersten Beschichtungsmaterial geeignet sind und zu überraschend guten Haftungsergebnissen führen. Es ist im Sinne der Erfindung bevorzugt, dass die zweite Beschichtung Nickel und/oder Nickel-Phosphor umfasst.

Es ist im Sinn der Erfindung bevorzugt, dass eine Gesamtdicke der ersten Beschichtung und der zweiten Beschichtung in einem Bereich von größer als 4 $\mu$m liegt, bevorzugt in einem Bereich von als größer 8 $\mu$m und am meisten bevorzugt in einem Bereich von größer als 10 $\mu$m. Das bedeutet im Sinne der Erfindung bevorzugt, dass eine Summe der Dicke der ersten Beschichtung und der Dicke der zweiten Beschichtung größer als 4 $\mu$m sein kann, bevorzugt größer als 8 $\mu$m und am meisten bevorzugt größer als 10 $\mu$m. Tests haben gezeigt, dass eine Gesamtdicke der ersten Beschichtung und der zweiten Beschichtung in den genannten Bereichen besonders gut dazu geeignet ist, den elektrischen Gesamtübergangswiderstand der Schnittstelle weiter zu reduzieren und somit die Leistungsdichte der Schnittstelle zu verbessern.

Es ist im Sinn der Erfindung bevorzugt, dass die erste Beschichtung einen Graphitanteil von kleiner als 30 % aufweist. Das bedeutet im Sinne der Erfindung bevorzugt, dass ein Graphitanteil der ersten Beschichtung in einem Bereich von kleiner als 30 % liegt. Tests haben gezeigt, dass ein Graphitanteil von kleiner als 30 % der ersten Beschichtung in dem genannten Bereich besonders langlebig und robust ist und darüber hinaus besonders gut dazu geeignet ist, den geringen elektrischen Gesamtübergangswiderstand der Schnittstelle und somit die Leistungsdichte der Schnittstelle zu über eine große Lebensdauer zu erhalten. In der zweiten Beschichtung ist vorzugsweise kein Graphit enthalten. Die Formulierung, dass die zweite Beschichtung kein umfasst, bedeutet im Sinne der Erfindung bevorzugt, dass herstellungsseitig nicht vorgesehen ist, dass Graphit in der zweiten Beschichtung enthalten ist. Es kann allerdings aufgrund von Diffusion und atomaren Wanderungsprozessen nicht ausgeschlossen werden, dass es vor allem im Bereich der Grenzschichten zum Grundmaterial bzw. zur ersten Beschichtung zu einem Eintrag von Fremdatomen, wie Graphit, d.h. Kohlenstoff, oder Kupfer kommt.

Es ist im Sinn der Erfindung bevorzugt, dass mindestens einer der Kontaktpartner an seiner Oberfläche eine Mikrostrukturierung aufweist, wobei die Mikrostrukturierung eine reduzierte Spitzenhöhe von größer als 0,3 $\mu$m und/oder eine reduzierte Riefentiefe von größer als 0,3 $\mu$m aufweist. Bei der reduzierte Spitzenhöhe kann es sich vorzugsweise um die gemittelte Höhe von solchen Elementen handeln, die aus der Oberfläche des mindestens einen Kontaktpartners herausragen. Die reduzierte Spitzenhöhe kann vorzugsweise durch den sog. Rpk-Wert beschrieben werden. Bei der reduzierte Riefentiefe kann es sich vorzugsweise um die gemittelte Tiefe von Riefen handeln, die ausgehend von einer Oberfläche des mindestens einen Kontaktpartners in das Material des Kontaktpartners hineinragen. Die reduzierte Riefentiefe kann vorzugsweise durch den sog. Rvk-Wert beschrieben werden. Es ist somit im Sinne der Erfindung bevorzugt, dass die Mikrostrukturierung einen Rpk-Wert größer als 0,3 $\mu$m und/oder einen Rvk-Wert von größer als 0,3 $\mu$m aufweist. Tests haben gezeigt, dass diese Kombination der beiden Rauheitswerte erstaunlich geringe Übergangswiderstände und eine hohe Verschleißfestigkeit der Schnittstelle gewährleisten. Die Ausgestaltung der der Riefen, die im Sinne der Erfindung bevorzugt "Täler" bilden, führt zu einer sehr guten Einbettung des Schmierstoffes und die Ausgestaltung der "Spitzen" führt zu sehr hohen lokalen Flächenpressungen zwischen den beiden Kontaktpartnern, so dass mit der den genannten Rauhigkeitswerten eine besonders gute elektrische Kontaktierung erreicht werden kann.

Bei der Oberfläche des Kontaktpartners kann es sich beispielsweise um die Oberfläche des Schwertes des männlichen Kontaktpartners handeln. Bei den weiblichen Kontaktpartnern können die Innenseiten der Kontaktarme bzw. die Innenseiten der Schenkel die Oberfläche des Kontaktpartners bilden, wobei es diese Innenseiten der Kontaktarme bzw. der Schenkel der weiblichen Kontaktpartner sind, die im Verbindungsfall mit den männlichen Kontaktpartner in Kontakt vorliegen, damit elektrische Energie von der Energieversorgungsvorrichtung an die Werkzeugmaschine übertragen werden kann. Es ist im Sinn der Erfindung bevorzugt, dass sich die Mikrostrukturierung an der Oberfläche des mindestens einen Kontaktpartners periodisch wiederholt.

Es ist im Sinn der Erfindung bevorzugt, dass mindestens einer der Kontaktpartner an seiner Oberfläche ein Schmiermittel aufweist, wobei das Schmiermittel einen Ölanteil in Masseprozent von größer als 40 % aufweist. Das bedeutet im Sinne der Erfindung bevorzugt, dass ein bevorzugt fetthaltiges Schmiermittel auf mindestens einem der Kontaktpartner aufgebracht werden kann, um die Schnittstelle robuster gegen Oxidation zu machen und so ihre Lebenszeit zu verlängern und um die Stromübertragungsfähigkeit der Schnittstelle zu verbessern. Durch das Schmiermittel kann vorteilhafterweise sowohl der abrasive, als auch adhäsive Verschleiß der beiden Kontaktpartner während des Aufsteckens verhindert werden. Auf diese Weise wird ein vorzeitiger, unerwünschter Verschleiß der Beschichtungen verhindert, so dass mit den Beschichtungen auch der gute Übergangswiderstand erhalten bleibt. Selbst wenn die Beschichtungen gegen Lebensdauerende einen gewissen Verschleiß aufweisen, hilft der Schmierstoff vorteilhafterweise dabei, die Luftzufuhr zu den korrosionsanfälligen Grundmaterialien zu unterbinden und so eine schädliche Oxidation zu vermeiden. Es ist im Sinne der Erfindung bevorzugt, dass das Schmiermittel beispielsweise einen Ölanteil von bis zu 95 % aufweist, sowie einen Additivanteil von 0 bis 10 %, einen Verdickeranteil von 3 bis 40 % und einen Festschmierstoffanteil von 0 - 20 %. Vorzugsweise stellen das Öl und die Additive flüssige Bestandteile des Schmiermittels dar, wobei diese vorzugsweise den "Ölanteil" des Schmiermittels ausmachen bzw. festlegen. Verdicker und Schmierstoffe sind Feststoffe und stellen einen Feststoffanteil des Schmiermittels dar.

Es ist im Sinn der Erfindung bevorzugt, dass das Schmiermittel zum Verdicken mindestens einen Feststoff aufweist, wobei der Feststoff eine Metallseife, die bevorzugt als Metallkomplexseife ausgebildet ist, und/oder einen Polyharnstoff umfasst.

Darüber hinaus kann das Schmiermittel mindestens ein Additiv zum Verschleißschutz und/oder mindestens ein Additiv zur Buntmetalldeaktivierung umfassen. Die Additive zum Verschleißschutz können im Sinne der Erfindung bevorzugt auch als «Verschleißschutzadditive» bezeichnet werden, während die Additive zur Buntmetalldeaktivierung vorzugsweise als «Buntmetalldeaktivtoren» bezeichnet werden können. Mit den Verschleißschutzadditiven kann vorteilafterweise die Verschleißfestigkeit der Schnittstelle erhöht werden. Wenn Buntmetalldeaktivtoren zum Einsatz kommen, kann die unerwünschte Oxidation von Buntmetallen der Grundmaterialien reduziert bzw. vermindert werden.

Die Kontaktpartner der Verbindungspartner der Schnittstelle können in dem jeweiligen Gerät - Werkzeugmaschine oder Energieversorgungsvorrichtung - angefedert vorliegen. Es kann im Sinne der Erfindung bevorzugt sein, dass sowohl die männlichen, als auch die weiblichen Kontaktpartner angefedert sind, oder beide Gruppen von Kontaktpartnern. Es kann im Sinne der Erfindung darüber hinaus bevorzugt sein, dass sowohl die Kontaktpartner der Werkzeugmaschine, als auch die Kontaktpartner der Energieversorgungsvorrichtung angefedert sind, oder beide Gruppen von Kontaktpartnern. Vorzugsweise können die einzelnen Kontaktpartner jeder für sich angefedert sein, wobei diese Situation im Sinne der Erfindung bevorzugt als «Einzel-Anfederung» bezeichnet wird. Es kann im Sinne der Erfindung auch bevorzugt sein, dass die Werkzeugmaschine und/ oder die Energieversorgungsvorrichtung Aufnahmevorrichtungen zur Aufnahme der jeweiligen Kontaktpartner umfassen, wobei dann beispielsweise die Aufnahmevorrichtungen angefedert sein können. Es ist im Sinne der Erfindung bevorzugt, dass eine Anfederung im Bereich der Werkzeugmaschine und/oder im Bereich der Energieversorgungsvorrichtung erfolgen kann. Der Begriff «Anfederung» bedeutet im Sinne der Erfindung bevorzugt, dass der angefederte Gegenstand, beispielsweise ein einzelner Kontaktpartner oder eine Aufnahmevorrichtung, die vorzugsweise dazu eingerichtet ist, mehr als einen Kontaktpartner aufzunehmen bzw. zusammenzufassen, ein elastisches Mittel zur Anfederung umfasst. Dieses elastische Mittel zur Anfederung kann beispielsweise ein elastisches Element, wie eine Feder umfasst. Details zur Anfederung werden weiter unten beschrieben. Das elastische Mittel zur Anfederung ist vorzugsweise dazu eingerichtet, an dem anzufedernden Kontaktpartner oder an der anzufedernden Aufnahmevorrichtung anzugreifen. Vorzugsweise wird mit Hilfe der Kontaktpartner eine form- und/oder reibschlüssige Verbindung zwischen der Werkzeugmaschine und der Energieversorgungsvorrichtung gebildet. Es stellt einen wesentlichen Vorteil der Erfindung dar, dass die mit der form- und/oder reibschlüssigen Verbindung besonders große elektrische Ströme übertragen werden können und dass überraschenderweise die Relativwege zwischen den Kontaktpartnern besonders kurz gehalten, wenn nicht gar auf ein Minimum reduziert werden können. Dadurch kann vorteilhafterweise die Lebensdauer der Schnittstelle zwischen Werkzeugmaschine und Energieversorgungsvorrichtung erheblich verlängert werden. Die weiblichen und die männlichen Kontaktpartner der Schnittstelle können im Sinne der Erfindung bevorzugt auch als «Leistungskontakte» der Schnittstelle bezeichnet werden. Durch die Vorsehung des mindestens einen elastischen Mittels Anfederung kann auf einfache Art und Weise an den Kontaktpartnern wirkenden Vibrationen und Erschütterungen ausgeglichen werden, die zu einer Relativbewegung und sogar zu einer tatsächlichen Unterbrechung der Kontaktverbindung zwischen dem Akkumulator und der Werkzeugmaschine führen können.

Es ist im Sinne der Erfindung bevorzugt, dass derjenige Kontaktpartner, an dem das elastische Mittel Anfederung angreift, beweglich gelagert ist. Mit anderen Worten kann derjenige Kontaktpartner, mit dem das elastische Mittel zur Reduzierung der Relativbewegung wirkverbunden ist, beweglich gelagert sein. Es ist im Sinne der Erfindung bevorzugt, dass der beweglich gelagerte Kontaktpartner und/oder die beweglich gelagerte Aufnahmevorrichtung angefedert ist. Wenn mehr als ein Kontaktpartner pro Verbindungspartner der Schnittstelle vorhanden ist oder wenn die Werkzeugmaschine und/oder die Energieversorgungsvorrichtung mehr als eine Aufnahmevorrichtungen aufweisen, kann es im Sinne der Erfindung bevorzugt sein, dass die beweglich gelagerten Kontaktpartner und/oder die beweglich gelagerten Aufnahmevorrichtungen angefedert sind. Auf diese Weise können die Relativbewegungen zwischen den Kontaktpartnern und der Übergangswiderstand weiter erheblich vermindert und die Lebensdauer der Schnittstelle erheblich verlängert werden.

Die Aufnahmevorrichtung kann einen Kontaktblock bzw. einen Kontaktmittelblock bilden, der mit Hilfe der elastischen Mittel beweglich bzw. angefedert gelagert sein kann. Es ist im Sinne der Erfindung bevorzugt, dass die Aufnahmevorrichtung die Kontaktpartner eines Verbindungspartners der Schnittstelle, also Werkzeugmaschine oder Energieversorgungsvorrichtung, umfasst. Es kann allerdings im Sinne der Erfindung auch bevorzugt sein, dass mehrere Aufnahmevorrichtungen vorgesehen sind, die jeweils eine Teilmenge der Kontaktpartner eines Verbindungspartners aufnehmen können. Vorzugsweise können auch dieses mehreren Aufnahmevorrichtungen dadurch angefedert sein, dass das elastische Mittel zur Anfederung an diesen mehreren Aufnahmevorrichtungen angreift. Dabei können die Aufnahmevorrichtungen die Leistungskontakte, d.h. die weiblichen und männlichen Kontaktpartner, und/oder die Kommunikationselemente umfassen. Es ist im Kontext der Erfindung bevorzugt, das elastische Mittel zur Reduzierung der Relativbewegung auch als «elastisches Mittel zur Reduzierung der Relativbewegung zwischen den Kontaktpartnern» oder als «elastisches Mittel» zu bezeichnen.

Vorzugsweise ist derjenige Kontaktpartner, an dem das elastische Mittel zur Reduzierung der Relativbewegung angreift, im verbundenen Zustand relativ zur Werkzeugmaschine oder relativ zur Energieversorgungsvorrichtung beweglich gelagert. Wenn die Anfederung auf Seiten der Werkzeugmaschine erfolgt, d.h. das mindestens eine elastische Mittel an den Kontaktpartner bzw. der Aufnahmevorrichtung der Werkzeugmaschine angreift, führt die so ausgestaltete Anfederung im Bereich der Werkzeugmaschine vorzugsweise dazu, dass der entsprechende Kontaktpartner im verbundenen Zustand relativ zur Werkzeugmaschine beweglich gelagert ist. Wenn die Anfederung auf Seiten der Energieversorgungsvorrichtung erfolgt, d.h. das mindestens eine elastische Mittel an den Kontaktpartner bzw. der Aufnahmevorrichtung der Energieversorgungsvorrichtung angreift, führt die so ausgestaltete Anfederung im Bereich der Energieversorgungsvorrichtung vorzugsweise dazu, dass der entsprechende Kontaktpartner im verbundenen Zustand relativ zur Energieversorgungsvorrichtung beweglich gelagert ist.

Es ist im Sinne der Erfindung bevorzugt, dass der mindestens eine männliche Kontaktpartner an der Werkzeugmaschine angeordnet vorliegt. Die männlichen Kontaktpartner können Schwerter umfassen, die in einen weiblichen Kontaktpartner der Schnittstelle bzw. des anderen Systembestandteils eingeführt werden können. Entsprechend einer vorteilhaften Ausführungsform der vorliegenden Erfindung kann vorgesehen sein, dass die männlichen Kontaktpartner in Form von stiftartigen Steckern oder Schwertern und die weiblichen Kontaktpartner der Schnittstelle in Form von Klemmen mit elastisch verformbaren Schenkeln zur Aufnahme der stiftartigen Stecker oder Schwerter ausgestaltet sind. Der männliche Kontaktpartner kann von einem vorstehenden Bereich und einem Anschlag gebildet werden, wobei der vorstehende Bereich in einem verbundenen Zustand der Schnittstelle, in dem die Energieversorgungsvorrichtung mit der Werkzeugmaschine verbunden vorliegt («Verbindungsfall»), in einem der weiblichen Kontaktpartner eingeführt vorliegt. Im unverbundenen Zustand können die Werkzeugmaschine und die Energieversorgungsvorrichtung unabhängig und voneinander getrennt vorliegen. Dies kann beispielsweise der Fall sein, wenn die Energieversorgungsvorrichtung aufgeladen wird und sich in einem Ladegerät zum Aufladen befindet. Es kann im Sinne der Erfindung auch bevorzugt sein, dass der mindestens eine männliche Kontaktpartner an der Energieversorgungsvorrichtung angeordnet vorliegt.

Die Energieversorgungsvorrichtung kann vorzugsweise mindestens einen Akkumulator («Akku») umfassen, wobei die Energieversorgungsvorrichtung dazu eingerichtet ist, die Werkzeugmaschine mit elektrischer Energie zu versorgen. Die Abgabe von elektrischer Energie von der Energieversorgungsvorrichtung an die Werkzeugmaschine erfolgt insbesondere im verbundenen Zustand, in dem die Werkzeugmaschine über die Schnittstelle mit der Energieversorgungsvorrichtung verbunden vorliegt. Die weiblichen und männlichen Kontaktpartner greifen im verbundenen Zustand ineinander, so dass über einen Kontaktbereich zwischen den Kontaktpartner elektrischer Strom bzw. elektrische Energie fließen kann.

Das mindestens eine elastische Mittel zur Anfederung kann vorzugsweise mindestens ein elastisches Element, wie eine Feder, umfassen. Das elastische Element kann dabei in Form einer Feder und insbesondere einer Spiral-, Biege- oder Schraubenfeder ausgestaltet sein. Alternativ kann das elastische Element als ein Bauteil aus einem elastisch verformbaren Werkstoff ausgestaltet ist. Als Werkstoff ist dabei auch ein Elastomer möglich. Hierdurch kann auf einfache Art und Weise einer vibrationsbedingten Bewegung des Anschlusselements in mehreren Richtungen, d.h. nicht nur in der Richtung zu oder entgegen dem Anschlusselement, entgegengewirkt werden. Darüber hinaus können die unerwünschten Relativbewegungen zwischen den Kontaktpartnern der Schnittstelle durch die Verwendung eines elastischen Elements wirksam verkürzt werden.

Es ist im Sinne der Erfindung bevorzugt, dass der männliche Kontaktpartner beim Eindringen in den weiblichen Kontaktpartner das mindestens eine elastische Mittel zusammendrückt, so dass das elastische Mittel in einen Spannungszustand gebracht werden. Das Zusammendrücken kann vorzugsweise eine elastische Verformung oder eine Kompression darstellen. Vorzugsweise werden die Begriffe «Zusammendrücken», «Kompression» und «elastische Verformung», sowie die entsprechenden Verben im Kontext der vorliegenden Erfindung synonym verwendet. Das Zusammendrücken des elastischen Mittels führt vorteilhafterweise zu dem Spannungszustand. Alternativ oder ergänzend kann auch der mindestens eine männliche Kontaktpartner angefedert sein. Der Begriff «Anfederung» ist im Sinne der Erfindung so zu verstehen, dass der angefederte Kontaktpartner mit den elastischen Mitteln zwischen den Kontaktpartnern wirkverbunden ist. Mit anderen Worten können die elastischen Mittel zwischen den Kontaktpartnern an einem der Kontaktpartner angreifen, wodurch vorteilhafterweise eine Anfederung des entsprechenden Kontaktpartners erreicht wird. Es ist im Sinne der Erfindung bevorzugt, dass das mindestens eine elastische Mittel in dem eingeschobenen, verbundenen bzw. verriegelten Zustand, in dem die Energieversorgungsvorrichtung und die Werkzeugmaschine miteinander verbunden vorliegen, in einem Spannungs- oder gespannten Zustand vorliegt. Es ist im Sinne der Erfindung bevorzugt, dass die elastischen Mittel auch im nicht-verbauten Zustand vorgespannt sind, wobei dadurch ein Kraftfluss innerhalb der Energieversorgungsvorrichtung geschlossen wird. Der mindestens eine weibliche Kontaktpartner kann sich dadurch auf der Energieversorgungsvorrichtung abstützen. Durch die Spannung des mindestens einen elastischen Mittels, insbesondere im verbundenen Zustand des Kontaktsystems, werden die männlichen und die weiblichen Kontaktpartner fest aneinander gedrückt, so dass sich ein besonders guter Kontakt zwischen den Kontaktpartnern ausbildet. Aufgrund dieser «angefederten» Kontaktierung der Kontaktpartner bzw. aufgrund des besonders engen Kontakts der Kontaktpartner kann die Leistungsdichte des erzeugten Kontakts erheblich erhöht werden, so dass mithin eine Übertragung von elektrischen Konstant-Strömen in einem Bereich von mehr als 50 Ampère, bevorzugt mehr als 70 Ampère oder besonders bevorzugt mehr als 100 Ampère ermöglicht wird. Außerdem kann die Lebenszeit des vorgeschlagenen Kontaktsystems wesentlich verlängert werden, so dass das vorgeschlagene Kontaktsystem besonders gut für Energieversorgungsvorrichtungen mit langen Lebenszeiten und/oder hohen Abgabeströmen geeignet ist, weil die höheren mechanischen und/oder elektrischen Anforderungen an eine Schnittstelle durch die Erfindung optimal erfüllt werden können.

Es ist im Sinne der Erfindung bevorzugt, dass beim Verbinden der Energieversorgungsvorrichtung mit der Werkzeugmaschine die Energieversorgungsvorrichtung in beispielsweise einen Hohlraum der Werkzeugmaschine eingeführt wird. Um die elektrische Verbindung zwischen den Verbindungspartnern «Energieversorgungsvorrichtung» und «Werkzeugmaschine» herzustellen, werden in einem ersten Schritt die Kontaktpartner miteinander in Kontakt gebracht. Das passiert vorzugsweise dadurch, dass die Schwerter der männlichen Kontaktpartner in die Aufnahmeklemmen der weiblichen Kontaktpartner eingeführt werden. Dieser Vorgang wird im Sinne der Erfindung bevorzugt auch als «Zusammenschieben der Kontaktpartner» bezeichnet. Es ist im Sinne der Erfindung insbesondere bevorzugt, dass der oder die beweglich gelagerte(n) Kontaktpartner auf den oder die ortsfesten Kontaktpartner geschoben werden, wobei das Spiel bzw. die Bewegungsfreiheit durch die Erfindung vorteilhafterweise im Bereich des beweglich gelagerten Kontaktpartners gewährt wird. Anschließend wird in einem zweiten Schritt das mindestens eine elastische Mittel gespannt, beispielsweise dadurch, dass das elastische Element, zusammengedrückt bzw. elastisch verformt wird. Daran anschließend können zusätzliche mechanische Befestigungs- oder Verriegelungsmechanismen greifen, beispielsweise das Verriegelungselemente einrasten oder in dafür vorgesehenen Ausbuchtungen, Vertiefungen oder Hinterschnitten zu liegen kommen. Es ist im Sinne der Erfindung insbesondere bevorzugt, dass die Spannung des elastischen Elements im verriegelten Zustand vorliegt. Mit anderen Worten kann das elastische Element insbesondere dann zusammengedrückt vorliegen, wenn die Energieversorgungsvorrichtung mit der Werkzeugmaschine verbunden ist. Auch das vorteilhafte Spiel und die Bewegungsfreiheit der angefederten Kontaktpartner bzw. der angefederten Aufnahmevorrichtung(en) sind vorzugsweise im verbundenen Zustand vorhanden. Es ist im Sinne der Erfindung bevorzugt, dass die Verriegelung der Energieversorgungsvorrichtung in der Werkzeugmaschine in einem Kraftfluss der Schnittstelle liegt.

Mithin wird im Kontext der vorliegenden Erfindung ein Verfahren zur Verbindung einer Energieversorgungsvorrichtung mit einer Werkzeugmaschine offenbart, wobei das Verfahren durch folgende Verfahrensschritt gekennzeichnet ist:

a) Zusammenschieben der Kontaktpartner der Energieversorgungsvorrichtung und der Werkzeugmaschine,

b) Spannung des mindestens einen elastischen Mittels zur Anfederung,

c) Einrasten etwaiger Verriegelungselemente, um die Energieversorgungsvorrichtung stabil in der Werkzeugmaschine zu befestigen.

Es ist im Sinne der Erfindung bevorzugt, dass der mindestens eine weibliche Kontaktpartner an der Energieversorgungsvorrichtung angeordnet vorliegt. Der mindestens eine weibliche Kontaktpartner kann vorzugsweise von einer Aufnahmeklemme gebildet werden, die dazu eingerichtet ist, das Schwert des männlichen Kontaktpartners aufzunehmen. Der weibliche Kontaktpartner kann dazu zwei Schenkel aus einem elastischen Material aufweisen, wobei die Schenkel bei der Einführung des männlichen Kontaktpartners auseinandergedrückt werden, so dass der männliche Kontaktpartner in einem Innenraum des weiblichen Kontaktpartners bzw. der Aufnahmeklemme zu liegen kommt. In diesem Fall wird im Sinne der Erfindung von dem verbundenen oder gesteckten Zustand der Schnittstelle gesprochen. Aufgrund der Elastizität des Materials, aus dem die Schenkel des weiblichen Kontaktpartners gebildet sind, drücken sich die Schenkel der Aufnahmeklemme des weiblichen Kontaktpartners in diesem verbundenen Zustand an das Schwert bzw. den vorstehenden Bereich des männlichen Kontaktpartners, so dass ein Kontaktbereich zwischen den Kontaktpartner geschaffen wird. Vorzugsweise wird elektrischer Strom bzw. elektrische Energie über diesen Kontaktbereich zwischen den Kontaktpartnern ausgetauscht, so dass Strom bzw. elektrische Energie von der Energieversorgungsvorrichtung in Richtung der Werkzeugmaschine fließen kann. Es kann im Sinne der Erfindung auch bevorzugt sein, dass der mindestens eine weibliche Kontaktpartner an der Werkzeugmaschine angeordnet vorliegt.

Die Schenkel des weiblichen Kontaktpartners können vorzugsweise in den Kontaktbereichen zum männlichen Kontaktpartner, aus einem guten Leiter, wie Kupfer, gebildet sein. Die weiblichen Kontaktpartner können darüber hinaus Überfedern aus Federstahl umfassen, wobei die Überfedern vorzugsweise dazu eingerichtet sind, die Schenkel der weiblichen Kontaktpartner so zusammenzudrücken, dass im Verbindungsfall ein stabiler Kontakt zwischen den weiblichen und den männlichen Kontaktpartnern entsteht. Neben Federstahl können auch andere Metalle oder Metalllegierungen mit elastischen Eigenschaften zur Herstellung der weiblichen Kontaktpartner verwendet werden. Für die Kontaktbereiche, die zur Übertragung der elektrischen Energie verwendet werden, sind Materialien mit einer guten Leitfähigkeit, einer hohen Streckgrenze und/ oder geringen Relaxationen sein, wie beispielsweise CuFe2P oder CuCrSiTi, ganz besonders bevorzugt. Die Kontaktbereiche können vorzugsweise auf den Innenseiten der Schenkel der weiblichen Kontaktpartner vorliegen, wo sie im Verbindungsfall in Kontakt zu den Schwertern der männlichen Kontaktpartner kommen.

Tests haben gezeigt, dass durch die Vorsehung der elastischen Mittel zur Anfederung an der Schnittstelle die Reibkorrosion («fretting») zwischen den Kontaktpartnern der Schnittstelle erheblich reduziert werden kann. Dadurch kann beispielsweise entweder auf weniger hochwertige, kostengünstige Beschichtungen der Kontaktpartner zurückgegriffen werden, oder der Einsatz des mindestens einen elastischen Mittels zur Reduzierung der Relativbewegung führt zu einer längeren Lebensdauer der Schnittstelle und zu einer höheren Leistungsdichte, wobei eine höhere Leistungsdichte im Sinne der Erfindung bevorzugt bedeutet, dass höhere elektrische Ströme durch die Schnittstelle aus männlichem und weiblichem Kontaktpartner übertragen werden können.

Die Erfindung kann eine unerwünschte Bewegung bzw. ein Schwingen der Energieversorgungsvorrichtung zwar nicht verhindern, aber das mindestens eine elastische Mittel zur Reduzierung der Relativbewegung trägt vorteilhafterweise dafür Sorge, dass die berührungs- und schwingungsempfindlichen Paare aus den männlichen und weiblichen Kontaktpartnern von der Energieversorgungsvorrichtung und/oder der Werkzeugmaschine entkoppelt und so vor deren Bewegungen und Schwingungen geschützt sind.

Es ist im Sinne der Erfindung bevorzugt, dass mindestens je ein männlicher und ein weiblicher Kontaktpartner eine Einheit bilden, wobei diese Einheit in einem verbundenen Zustand entkoppelt von einer Bewegung der Energieversorgungsvorrichtung und/oder der Werkzeugmaschine vorliegt. Vorteilhafterweise wird diese Entkopplung der Einheit aus männlichem und weiblichem Kontaktpartner und der Energieversorgungsvorrichtung insbesondere durch das mindestens eine elastische Mittel zur Anfederung bewirkt, das an einem der Kontaktpartner oder an der Einheit aus mindestens je einem männlichen und weiblichen Kontaktpartner angreift. Mit anderen Worten ist es im Sinne der Erfindung bevorzugt, dass die elastischen Mittel dazu eingerichtet sind, an einem der Kontaktpartner oder an der Einheit aus je einem männlichen und weiblichen Kontaktpartner anzugreifen. Die Entkopplung der Einheit von der Energieversorgungsvorrichtung ergibt sich insbesondere dann, wenn das mindestens eine elastische Mittel an der Energieversorgungsvorrichtung vorliegt. Es kann aber im Sinne der Erfindung auch bevorzugt sein, dass das mindestens eine elastische Mittel an der Werkzeugmaschine vorliegt. In diesem Fall kann die Einheit aus männlichen und weiblichen Kontaktpartnern vorzugsweise von der Werkzeugmaschine entkoppelt vorliegen.

Es ist im Sinne der Erfindung bevorzugt, dass die Schnittstelle eine Aufnahmevorrichtung zur Aufnahme von mindestens einem weiblichen Kontaktpartner und/oder von mindestens einem männlichen Kontaktpartner umfasst. Mit anderen Worten kann die Aufnahmevorrichtung dazu eingerichtet sein, mindestens einen weiblichen Kontaktpartner oder mindestens einen männlichen Kontaktpartner oder mindestens einen weiblichen und mindestens einen männlichen Kontaktpartner aufzunehmen. In einem bevorzugten Ausführungsbeispiel der Erfindung kann die Aufnahmevorrichtung mindestens einen weiblichen Kontaktpartners aufnehmen. Es kann im Sinne der Erfindung bevorzugt sein, dass die weiblichen Kontaktpartner einzeln an der Schnittstelle angeordnet vorliegen oder dass sie Bestandteil einer Aufnahmevorrichtung sind, wobei die einzelnen weiblichen Kontaktpartner oder die Aufnahmevorrichtung entweder Bestandteile der Werkzeugmaschine oder der Energieversorgungsvorrichtung sein können. Es ist im Sinne der Erfindung am allermeisten bevorzugt, dass die einzelnen weiblichen Kontaktpartner oder die Aufnahmevorrichtung Bestandteile der Energieversorgungsvorrichtung sind/ist.

Es ist im Sinne der Erfindung bevorzugt, dass die Energieversorgungsvorrichtung eine gerade Anzahl von Kontaktpartner aufweist, wobei es sich bei den Kontaktpartnern um weibliche und/oder männliche Kontaktpartner handeln kann. Die Energieversorgungsvorrichtung weist vorzugsweise einen Pluspol und einen Minuspol auf, wobei jeder der beiden Pole mit einem Kontaktpartner verbunden vorliegt, d.h. einen Kontaktpartner aufweist. Beispielsweise kann die Energieversorgungsvorrichtung zwei, vier, sechs, acht oder mehr Kontaktpartner aufweisen, die einzeln oder in einem Kontaktblock angefedert sein können. Dabei kann vorzugsweise eine Hälfte der Kontaktpartner dem Minuspol der Energieversorgungsvorrichtung zugeordnet werden, während die andere Hälfte der Kontaktpartner dem Pluspol der Energieversorgungsvorrichtung zugeordnet werden kann.

Es ist im Sinne der Erfindung bevorzugt, dass die Kontaktpartner der Schnittstelle einzel-angefedert sind oder dass ein von den Kontaktpartnern gebildeter Kontaktblock als Ganzes angefedert ist. Wenn die Kontaktpartner einzel-angefedert sind, können die Kontaktpartner einzeln mit den elastischen Mitteln zur Anfederung wirkverbunden vorliegen. Wenn die Schnittstelle an einem der Systembeteiligten - d.h. Werkzeugmaschine oder Energieversorgungsvorrichtung - beispielsweise vier Kontaktpartner umfasst, kann jedem dieser vier Kontaktpartner ein elastisches Mittel oder ein elastisches Element zugeordnet sein. Vorzugsweise wird in dieser Ausgestaltung der Erfindung von einer «Einzel-Anfederung der Leistungskontakte der Schnittstelle» gesprochen. Alternativ kann es im Sinne der Erfindung bevorzugt sein, dass ein ganzer Kontaktblock, der vorzugsweise mehrere Kontaktpartner - weibliche und/oder männliche - umfasst, als Ganzes angefedert ist. Ein solcher Kontaktblock wird im Sinne der Erfindung bevorzugt auch als Kontaktmittelblock bezeichnet, wobei der Kontaktmittelblock von einer Aufnahmevorrichtung mit Leistungskontakten gebildet werden kann. Es ist im Sinne der Erfindung bevorzugt, dass der Kontaktblock bzw. die Aufnahmevorrichtung mit einem elastischen Mittel oder einem elastischen Element wirkverbunden sind. Das bedeutet im Sinne der Erfindung bevorzugt, dass dem Kontaktblock oder der Aufnahmevorrichtung ein elastisches Mittel oder ein elastisches Element zugeordnet ist. Vorzugsweise wird in dieser Ausgestaltung der Erfindung von einer «angefederten Aufnahmevorrichtung» oder einem «angefederten Kontaktmittelblock» gesprochen.

Es ist im Sinne der Erfindung bevorzugt, dass das mindestens eine elastische Mittel zur Anfederung der Aufnahmevorrichtung - vorzugsweise als Ganzes - zugeordnet ist. In diesem Fall kann beispielsweise eine Aufnahmevorrichtung, die zum Beispiel vier weibliche Kontaktpartner aufnehmen kann, mit einem elastischen Element mit dem entsprechenden Systembestandteil - Werkzeugmaschine oder Energieversorgungsvorrichtung - verbunden vorliegen. Die Entkopplung findet dann beispielsweise zwischen der Energieversorgungsvorrichtung und der Aufnahmevorrichtung statt, so dass die weiblichen Kontaktpartner in der Aufnahmevorrichtung von den Bewegungen und/oder Schwingungen der Energieversorgungsvorrichtung und/oder der Werkzeugmaschine entkoppelt bzw. vor ihnen geschützt sind. Tests haben gezeigt, dass die Verwendung einer Aufnahmevorrichtung besonders gut vor Kippbewegungen schützt und das Reibmoment zwischen den Kontakten erheblich erhöht wird. Die Aufnahmevorrichtung mit den Leistungskontakten kann vorzugsweise einen Kontaktblock bilden, wobei durch die Erfindung dieser bevorzugt beweglich gelagerte bzw. angefederte Kontaktblock besonders gut vor Kippbewegungen u.Ä. geschützt wird. Dieser Vorteil der Erfindung kann dadurch erreicht werden, dass Abstützflächen und die Reibkräfte der einzelnen Klemmkontakte der weiblichen Kontaktpartner seitlich bzw. im Wesentlichen senkrecht zur Einschubrichtung weit voneinander beabstandet sind und somit durch den großen Hebelarm der Lagerung dynamische Kippmomente sehr gut aufgenommen werden können. Gleiches gilt für die Abstützflächen eines Kontakblocks, wenn die weiblichen Kontaktpartner von einer Aufnahmevorrichtung aufgenommen werden. Das eben Gesagte gilt analog auch für männliche Kontaktpartner, insbesondere dann, wenn sie von einer Aufnahmevorrichtung aufgenommen werden und einen Kontaktblock bilden.

Alternativ kann es bevorzugt sein, dass das mindestens eine elastische Mittel Anfederung je einem Kontaktpaar aus weiblichen und männlichen Kontaktpartner zugeordnet sind. In diesem Fall kann beispielsweise jedes Kontaktpaar aus weiblichen und männlichen Kontaktpartnern ein eigenes elastisches Mittel zur Reduzierung der Relativbewegung, wie ein elastisches Element, aufweisen und mit Hilfe der elastischen Mittel von den Bewegungen und/oder Schwingungen der Energieversorgungsvorrichtung und/oder der Werkzeugmaschine entkoppelt bzw. vor ihnen geschützt sein.

Im Kontext der Erfindung wird auch eine Schnittstelle zur Übertragung von elektrischer Energie zwischen einer Werkzeugmaschine und einer Energieversorgungsvorrichtung offenbart. Die für das System aus Werkzeugmaschine und Energieversorgungsvorrichtung eingeführten Begriffe, Definitionen und technischen Vorteile gelten vorzugsweise für die Schnittstelle, die später beschriebene Energieversorgungsvorrichtung und die Verfahren zum Verbinden einer Energieversorgungsvorrichtung mit einer Werkzeugmaschine mit einer Schnittstelle analog. Die Schnittstelle ist dadurch gekennzeichnet, dass die Schnittstelle einen elektrischen Gesamtübergangswiderstand pro Pol von kleiner als 0,4 Milliohm, bevorzugt kleiner als 0,3 Milliohm und besonders bevorzugt kleiner als 0,2 Milliohm aufweist.

Darüber hinaus betrifft die Erfindung ein Verfahren zum Verbinden einer Energieversorgungsvorrichtung mit einer Werkzeugmaschine mit einer Schnittstelle, das dadurch gekennzeichnet ist, dass die Schnittstelle mindestens einen männlichen Kontaktpartner und mindestens einen weiblichen Kontaktpartner aufweist, wobei die männlichen Kontaktpartner und die weiblichen Kontaktpartner bei der Herstellung eines Kontakts zum Zwecke der Übertragung von elektrischer Energie von der Energieversorgungsvorrichtung an die Werkzeugmaschine von mindestens einem elastischen Mittel zur Anfederung unterstützt werden können. Es ist im Sinne der Erfindung bevorzugt, dass je ein männlicher und ein weiblicher Kontaktpartner ein Stromübertragungs-Paar, d.h. eine Einheit, bilden, wobei die Einheit in einem verbundenen Zustand entkoppelt von einer Bewegung der Energieversorgungsvorrichtung vorliegt.

In einem zweiten Aspekt betrifft die Erfindung eine Energieversorgungsvorrichtung zur Verwendung in dem vorgeschlagenen System. Bei der Energieversorgungsvorrichtung handelt es sich vorzugsweise um eine Energieversorgungsvorrichtung mit einer besonders hohen Lebensdauer und/oder um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben.

Die Energieversorgungsvorrichtung kann vorzugsweise einen Akkumulator oder eine bevorzugt wiederaufladbare Batterie aufweisen. Selbstverständlich ist es im Sinne der Erfindung auch möglich, dass die Energieversorgungsvorrichtung zwei oder mehr Akkus und/oder Batterien aufweist. Die Akkus und/oder Batterien können sog. Batteriepacks aufweisen, die beispielsweise zylindrische Zellen umfassen. Diese zylindrischen Zellen können beispielsweise eine chemische Substanz umfassend Lithium-Ionen, Magnesium-Ionen und/oder Natrium-Ionen enthalten, ohne darauf beschränkt zu sein. Es können aber auch anderen Zelltypen, beispielsweise mit quaderder würfelförmigen Zellen im Kontext der vorliegenden Erfindung zum Einsatz kommen.

Bei der Energieversorgungsvorrichtung handelt es sich vorzugsweise um eine Energieversorgungsvorrichtung mit einer besonders hohen Lebensdauer und/oder um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben. Die besonders hohe Lebensdauer kann vorzugsweise dazu führen, dass die Energieversorgungsvorrichtung besonders viele Einschubvorgänge bzw. Einschubzyklen übersteht, ohne zu verschleißen. Darüber hinaus kann die besonders hohe Lebensdauer bedeuten, dass die chemischen Bestandteile der Energieversorgungsvorrichtung dazu eingerichtet sind, häufiger als bisherige Energieversorgungsvorrichtungen aufgeladen werden zu können, ohne wesentlich zu altern. Ein wesentlicher Vorteil des vorgeschlagenen Systems besteht darin, dass durch den geringen elektrischen Gesamtübertragungswiderstand die hohe Leistungsfähigkeit der Energieversorgungsvorrichtung besonders gut ausgenutzt werden kann, so dass besonders viel Energie von der Energieversorgungsvorrichtung an die Werkzeugmaschine übertragen werden kann und so dass besonders hohe Konstant-Ströme von der Energieversorgungsvorrichtung in Richtung der Werkzeugmaschine fließen können. Dadurch können die Vorteile neuer Zell- und Batterietechnologien mit Hilfe der Erfindung optimal ausgenutzt werden. Mithin kann mit der Erfindung ein System aus Werkzeugmaschine und Energieversorgungsvorrichtung bereitgestellt werden, dass einen effizienten Einsatz von Energieversorgungsvorrichtungen in batteriebetriebenen Werkzeugmaschine ermöglicht, dies insbesondere auch für Applikationen und Anwendungen, die sehr hohe elektrische Leistungsanforderungen und/oder sehr hohe Lebensdaueranforderungen an das System bzw. seine Schnittstelle stellen.

Es ist im Sinne der Erfindung bevorzugt, dass die Energieversorgungsvorrichtung mindestens einer Energiespeicherzelle umfasst, wobei die mindestens eine Energiespeicherzelle im Sinne der Erfindung vorzugsweise auch als «Zelle» bezeichnet wird und einen Innenwiderstand DCR_I von kleiner als 10 Milliohm (mOhm) aufweist. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist eine Energieversorgungsvorrichtung mit einem Zell-Innenwiderstand DCR_I von kleiner als 10 Milliohm besonders gut geeignet, um besonders leistungsstarke Werkzeugmaschinen mit elektrischer Energie zu versorgen. Solche Energieversorgungsvorrichtungen können somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Vorteilhafterweise kann mit eine solchen Energieversorgungsvorrichtung eine Möglichkeit dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Es ist im Sinne der Erfindung bevorzugt, dass ein Verhältnis eines Widerstands der mindestens einen Zelle zu einer Oberfläche A der mindestens einen Zelle kleiner als 0,2 Milliohm/cm$^2$ ist, bevorzugt kleiner als 0,1 Milliohm/cm$^2$ und am meisten bevorzugt kleiner als 0,05 Milliohm/cm$^2$. Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V der mindestens einen Zelle kleiner als 0,4 Milliohm/cm$^3$ ist, bevorzugt kleiner als 0,3 $\mu$m Milliohm/cm$^3$ und am meisten bevorzugt kleiner als 0,2 Milliohm/cm$^3$. Der Fachmann kennt für übliche geometrische Formen, wie Quader, Würfel, Kugel oder dergleichen, die Formeln zur Berechnung der Oberfläche oder des Volumens eines solchen geometrischen Körpers. Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden · Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind. Die Werkzeugmaschine kann beispielsweise auch ein Ladegerät für die Energieversorgungsvorrichtung sein.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen ä fünf Zellen kann beispielsweise 15 Einzelzellen umfassen.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Es ist im Sinne der Erfindung bevorzugt, dass die mindestens Zelle der Energieversorgungsvorrichtung eine Oberfläche A und ein Volumen V aufweist, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

Die Formulierung, dass die Oberfläche A der mindestens einen Zelle ist größer ist als beispielsweise das Achtfache der dritten Wurzel des Quadrats des Volumens V kann vorzugsweise auch durch die Formel $A > 8 \cdot V^{(2/3)}$ zum Ausdruck gebracht werden. In einer anderen Schreibweise kann dieser Zusammenhang dadurch beschrieben werden, dass das Verhältnis A/V von Oberfläche zu Volumen größer ist als das Achtfache des Kehrwerts der dritten Wurzel des Volumens.

Dabei sind zur Prüfung, ob die obige Relation erfüllt ist, stets Werte in der gleichen Grundeinheit einzusetzen. Wenn beispielsweise ein Wert für die Oberfläche in $m^2$ in die obige Formel eingesetzt wird, so wird für das Volumen vorzugsweise ein Wert in der Einheit $m^3$ eingesetzt. Wenn beispielsweise ein Wert für die Oberfläche in der Einheit $cm^2$ in die obige Formel eingesetzt wird, so wird für das Volumen vorzugsweise ein Wert in der Einheit $cm^3$ eingesetzt. Wenn beispielsweise ein Wert für die Oberfläche in der Einheit $mm^2$ in die obige Formel eingesetzt wird, so wird für das Volumen vorzugsweise ein Wert in der Einheit $mm^3$ eingesetzt.

Zellgeometrien, die beispielsweise die Relation von $A > 8 \cdot V^{(2/3)}$ erfüllen, weisen vorteilhafterweise ein besonders günstiges Verhältnis zwischen der für die Kühlwirkung maßgeblichen Au-ßenfläche der Zelle zum Zellvolumen auf. Dabei haben die Erfinder erkannt, dass das Verhältnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche A von mindestens einer Zelle innerhalb der Energieversorgungsvorrichtung größer ist als das Sechsfache, bevorzugt das Achtfache und besonders bevorzugt das Zehnfache der dritten Wurzel des Quadrats des Volumens V der mindestens einen Zelle. Dadurch kann insbesondere die Wärmeabgabe an die Umgebung verbessert werden.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 20 Ampère, bevorzugt größer als 30 Ampère, am meisten bevorzugt größer 40 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 20 und 30 A als offenbart gelten, also zum Beispiel 21; 22,3; 24, 25,55 oder 27,06 Ampère usw. Darüber hinaus sollen auch Werte zwischen 30 und 40 A als offenbart gelten, also zum Beispiel 32; 33,3; 36, 38,55 oder 39,07 Ampère usw.

Es ist im Sinne der Erfindung bevorzugt, dass die Energieversorgungsvorrichtung eine Entlade-C-Rate von größer als $80 \cdot t^{(-0,45)}$ aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von $80 \cdot t^{(-0,45)}$ bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 40 Ampère, bevorzugt größer als 60 Ampère oder noch mehr bevorzugt größer als 80 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1 mögliche Ausgestaltung von weiblichen Kontaktpartnern mit mehreren Einzelkontaktpunkten

Fig. 2 Ansicht einer bevorzugten Ausgestaltung des Systems aus Werkzeugmaschine und Energieversorgungsvorrichtung

Fig. 3 mögliche Ausgestaltung der Oberseite einer Energieversorgungsvorrichtung einer bevorzugten Ausgestaltung des vorgeschlagenen Systems

Fig. 4 mögliche Ausgestaltung einer Einheit aus weiblichem und männlichem Kontaktpartner

Fig. 5 weitere mögliche Ausgestaltung einer Einheit aus weiblichem und männlichem Kontaktpartner

Fig. 6 Darstellung eines möglichen Ablaufs der Verbindung von Energieversorgungsvorrichtung und Werkzeugmaschine

Fig. 7 Darstellung verschiedener Kombinationen von Anfederungen und Anordnungen der Kontaktpartner

Fig. 8 Darstellung verschiedener Anordnungen der Kontaktpartner und ihre Belegungen

Fig. 9 Darstellung der Einzel-Anfederung von Kontakten im Vergleich zur Anfederung einer Aufnahmevorrichtung.

Fig. 10 schematische Seitenansicht einer bevorzugten Ausgestaltung der Energieversorgungsvorrichtung

Fig. 11 schematische Seitenansicht einer bevorzugten Ausgestaltung eines Stromübertragungs-Paares mit einer ersten Beschichtung

Fig. 12 schematische Seitenansicht einer bevorzugten Ausgestaltung eines Stromübertragungs-Paares mit einem Schmiermittel

Fig. 13 schematische Seitenansicht einer bevorzugten Ausgestaltung eines Stromübertragungs-Paares mit einer Mikrostrukturierung auf der Oberfläche

Fig. 14 schematische Ansicht einer bevorzugten Ausführungsform des Systems mit zwei Stromübertragungs-Paaren

Fig. 15 schematische Ansicht einer bevorzugten Ausführungsform des Systems mit mehreren Stromübertragungs-Paaren

Fig. 16 schematische Seitenansicht einer bevorzugten Ausgestaltung eines Stromübertragungs-Paares mit einer ersten und einer zweiten Beschichtung

Fig. 17 schematische Ansicht eines möglichen Aufbaus für eine Widerstandsmessung

Fig. 18 schematische Ansicht eines möglichen Aufbaus für eine Widerstandsmessung mit mehreren Stromübertragungs-Paaren

**Ausführungsbeispiele und Figurenbeschreibung:**

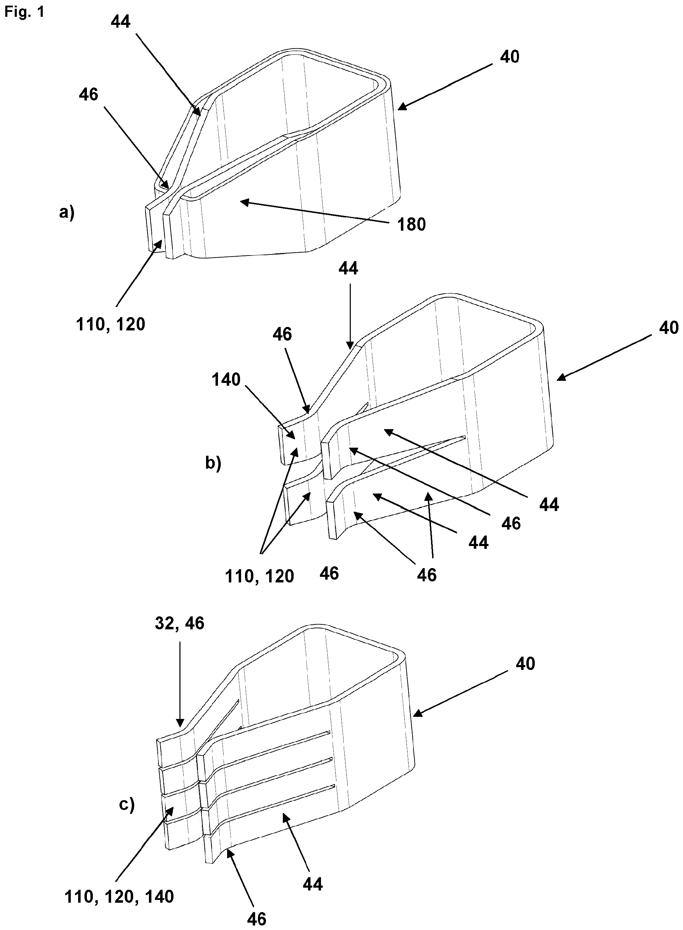

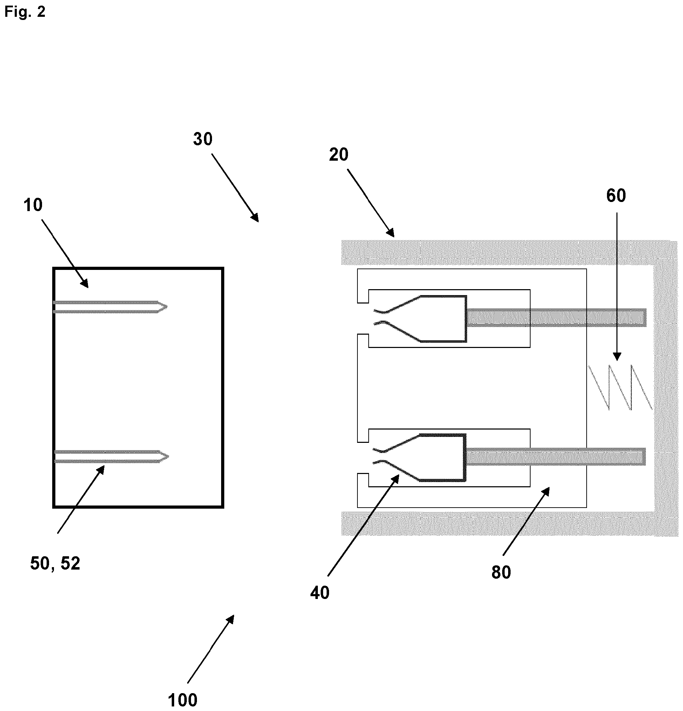

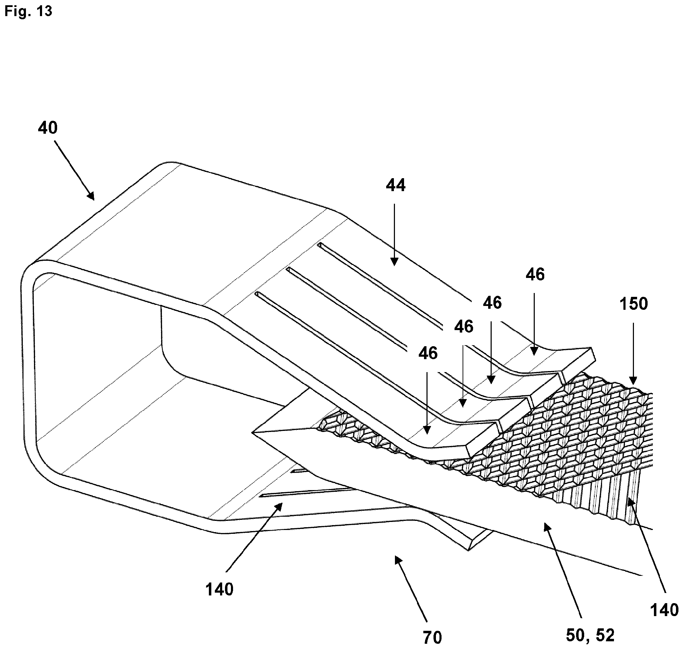

Figur 1 zeigt eine mögliche Ausgestaltung von weiblichen Kontaktpartnern 40 mit mehreren Einzelkontaktpunkten 46. In Teilfigur a) ist ein weiblicher Kontaktpartner 40 mit einer Überfeder 180 abgebildet. Die Überfeder 180 kann beispielsweise aus Federstahl bestehen oder Federstahl umfassen, während die Schenkel 44 des weiblichen Kontaktpartners 40 ein elektrisch gut leitendes Material, wie beispielsweise Kupfer, umfassen. Das Material der Kontaktarme 44 des weiblichen Kontaktpartners 40 kann vorzugsweise auch als Grundmaterial 130 bezeichnet werden. Die Kontaktarme 44 des weiblichen Kontaktpartners 40 können mit mindestens einer Beschichtung 110, 120 überzogen sein, wobei beispielsweise in einem ersten Schritt eine zweite Beschichtung 120 mit einem hohen Nickelanteil auf das Grundmaterial 130 des weiblichen Kontaktpartners 40 aufgebracht werden kann. Diese Untervernickelung dient vorzugsweise dazu, dass eine in einem zweiten Schritt aufgebrachte erste Beschichtung 110 besser auf dem Grundmaterial 130 hält bzw. haftet. Die erste Beschichtung 110 kann vorzugsweise einen hohen Silberanteil aufweisen. Der hohe Silberanteil trägt zu einer guten Stromleitfähigkeit der Schenkel 44 des weiblichen Kontaktpartners 40. Die erste Beschichtung 110 liegt vorzugsweise an den Innenseiten der Kontaktarme 44 des weiblichen Kontaktpartners 40 vor, die im Verbindungsfall in Kontakt mit den männlichen Kontaktpartnern 50 der Schnittstelle 30 vorliegen können. Die Innenseiten der Schenkel 44 des weiblichen Kontaktpartners 40 werden im Sinne der Erfindung bevorzugt auch als Oberseite 140 des weiblichen Kontaktpartners 40 bezeichnet. Vorzugsweise weisen auch die männlichen Kontaktpartner 50 bzw. ihre Schwerter 52 eine Oberseite 140 auf, die beispielsweise in Fig. 13 dargestellt ist. Die weiblichen Kontaktpartner 40 können vorzugsweise an der Energieversorgungsvorrichtung 20 (siehe Fig. 2) vorliegen, während die männlichen Kontaktpartner 50 an der Werkzeugmaschine 10 (siehe Fig. 2) vorliegen können. Die Anordnung der Kontaktpartner 40, 50 in Bezug auf die Energieversorgungsvorrichtung 20 und die Werkzeugmaschine 10 kann aber auch andersherum sein.

Die Überfeder 180 ist dazu eingerichtet, die Schenkel 44 des weiblichen Kontaktpartners 40 auf die Schwerter 52 (siehe Fig. 2) der männlichen Kontaktpartner 50 zu drücken, wenn die Energieversorgungsvorrichtung 20 mit der Werkzeugmaschine 10 verbunden vorliegt («Verbindungsfall»). Die Kontaktpartner 40, 50 bilden dann eine Schnittstelle 30 mit einem Kontaktbereich 32, wobei der Kontaktbereich 32 der Schnittstelle von Einzelkontaktpunkten 46 gebildet werden kann. In Fig. 1 sind mehrere Möglichkeiten dargestellt, eine Anzahl von Einzelkontaktpunkten 46 gegenüber konventionellen Schnittstellen, wie sie aus dem Stand der Technik bekannt sind, zu erhöhen. In Teilfigur 1a liegen zwei Einzelkontaktpunkte 46 im in dem Bereich des geringsten Abstands zwischen den Kontaktarmen 44 des weiblichen Kontaktpartners 40 vor, wobei die zwei Einzelkontaktpunkte 46 vorzugsweise Berührpunkte zwischen dem weiblichen Kontaktpartner 40 und einem männlichen Kontaktpartner 50 (siehe ab Fig. 2) bilden, wenn der männliche Kontaktpartner 50 eingeführt in die Kontaktarme 44 des weiblichen Kontaktpartners 40 vorliegt. In Teilfigur 1b weist der weibliche Kontaktpartner 40 auf jeder Schenkelseite zwei Kontaktarme 44 auf, so dass sich die Anzahl der Einzelkontaktpunkte 46 im Vergleich zu dem in Teilfigur 1a abgebildeten Ausführungsbeispiel der Erfindung verdoppelt. In dem in Teilfigur 1b abgebildeten Ausführungsbeispiel der Erfindung weist der weibliche Kontaktpartner 40 vier Einzelkontaktpunkte 46 auf. In dem in Teilfigur 1c abgebildeten Ausführungsbeispiel der Erfindung weist der weibliche Kontaktpartner 40 acht Einzelkontaktpunkte 46 auf. In Teilfigur 1c sind die Kontaktarme 44 des weiblichen Kontaktpartners 40 weiter unterteilt, so dass auf jeder Schenkelseite vier Kontaktarme 44 vorliegen. Dadurch kann die Anzahl der Einzelkontaktpunkte 46 im Vergleich zu dem in Teilfigur 1a abgebildeten Ausführungsbeispiel der Erfindung erheblich erhöht werden. Als Einzelkontaktpunkte 46 gelten insbesondere die lokalen Berührstellen, die über einen eigenen federnden Kontaktarm 44 auf den männlichen Kontaktpartner 50 gedrückt werden. Die Einzelkontaktpunkte 46 können vorzugsweise als Berührpunkte, Berührlinien oder auch Berührflächen ausgebildet sein. Es ist im Sinne der Erfindung bevorzugt, dass die Einzelkontaktpunkte 46 in den Kontaktbereichen 32 der Schnittstelle 30 angeordnet vorliegen.

Der in Fig. 1 abgebildete weibliche Kontaktpartner 40 kann an seiner Oberfläche 140 eine Mikrostrukturierung 150 aufweisen, wobei die Mikrostrukturierung 150 eine reduzierte Spitzenhöhe von größer als 0,3 μm und/oder eine reduzierte Riefentiefe von größer als 0,3 μm aufweist. Die Mikrostrukturierung 150 kann sich periodisch an der Oberfläche 140 des in Fig. 1 abgebildeten weiblichen Kontaktpartners 40 vorzugsweise periodisch wiederholen. Vorzugsweise kann die Mikrostrukturierung 150 auch an der Oberfläche 140 eines männlichen Kontaktpartners 50 angeordnet vorliegen. Der in Fig. 1 abgebildete weibliche Kontaktpartner 40 kann an seiner Oberfläche 140 ein Schmiermittel 160 aufweise, wobei das Schmiermittel 160 einen Fettanteil in Masseprozent von größer als 40 % aufweisen kann. Selbstverständlich kann auch der männliche Kontaktpartner 50 bzw. seine Oberfläche 140 mit dem Schmiermittel 160 eingefettet sein.

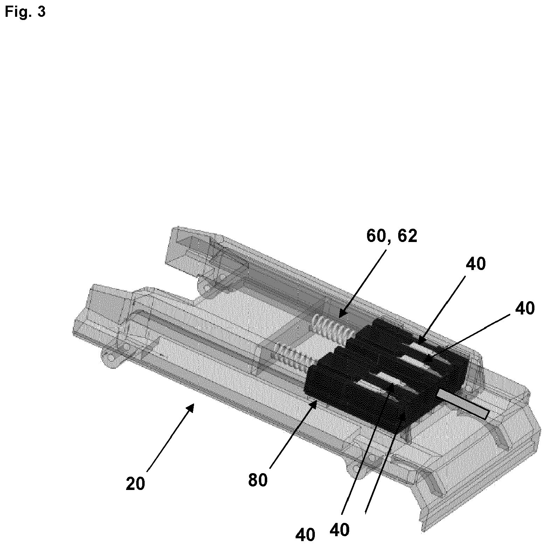

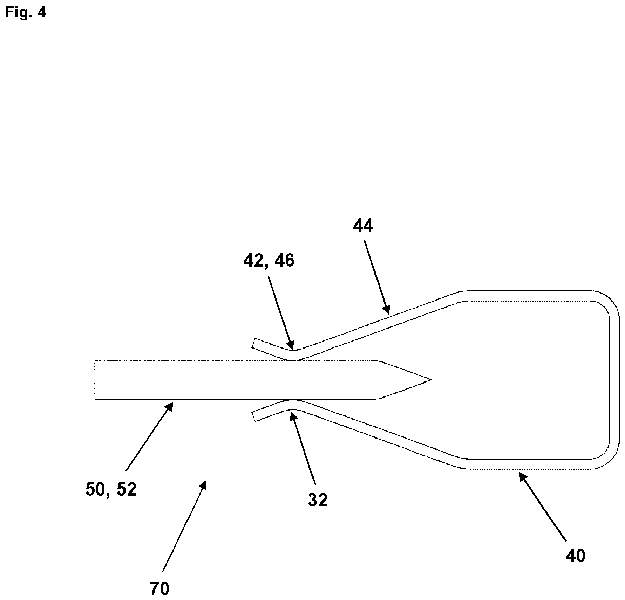

Figur 2 zeigt eine mögliche Ausgestaltung des Systems 100 aus Werkzeugmaschine 10 und Energieversorgungsvorrichtung 20. In dem in Fig. 2 dargestellten Ausführungsbeispiel der Erfindung ist die Werkzeugmaschine 10 auf der linken Bildhälfte abgebildet und die Energieversorgungsvorrichtung 20 auf der rechten Bildhälfte. Die Werkzeugmaschine 10 weist zwei männliche Kontaktpartner 50 auf, wobei insbesondere die Schwerter 52 in Fig. 2 dargestellt sind. Die männlichen Kontaktpartner 50 sind Bestandteil einer Schnittstelle 30, wobei die Schnittstelle 30 darüber hinaus auch weibliche Kontaktpartner 40 aufweist. In dem in Fig. 2 dargestellten Ausführungsbeispiel der Erfindung liegen die weiblichen Kontaktpartner 40 an der Energieversorgungsvorrichtung 20 angeordnet vor. Die weiblichen Kontaktpartner 40 können Einzelkontakte darstellen oder - wie in Fig. 2 und 3 dargestellt - in einem Block oder eine Schublade integriert vorliegen. Der Block oder die Schublade mit den weiblichen Kontaktpartnern 40 wird als Aufnahmevorrichtung 80 (siehe Fig. 2) bezeichnet. In Fig. 2 ist insbesondere der Fall dargestellt, dass die Werkzeugmaschine 10 und die Energieversorgungsvorrichtung 20 getrennt voneinander vorliegen. Die Werkzeugmaschine 10 und die Energieversorgungsvorrichtung 20 können zusammen ein System 100 bilden, wobei die Energieversorgungsvorrichtung 20 dazu eingerichtet ist, die Werkzeugmaschine 10 mit elektrischer Energie zu versorgen. Die Schnittstelle 30 umfasst darüber hinaus mindestens ein elastisches Mittel 60 zur Reduzierung eines Relativwegs zwischen den männlichen Kontaktpartnern 50 und den weiblichen Kontaktpartnern 40. Das mindestens eine elastische Mittel 60 kann ein elastisches Element 62 umfassen, das beispielsweise eine Feder oder eine Spiralfeder sein kann. Es sind aber auch alle anderen denkbaren elastischen Elemente 62 möglich und denkbar. Wenn die männlichen Kontaktpartner 50 in die weiblichen Aufnahmeklemmen 40 eingeführt werden, wird das elastische Mittel 60 zur Reduzierung eines Relativwegs zusammengedrückt, so dass ein besonders stabiler Kontakt zwischen den Kontaktpartnern 40, 50 entsteht. Ein solcher Kontakt wird in Fig. 4 gezeigt. Durch den Kontakt der Kontaktpartner 40, 50 und das Zusammendrücken des elastischen Mittels 60 zur Reduzierung eines Relativwegs ergibt sich ein Spiel bzw. ein Bewegungsraum, in dem eine Einheit 70 (siehe Fig. 4) aus männlichem Kontaktpartner 50 und weiblichem Kontaktpartner 40 vorliegen kann. Eine Bewegung oder Schwingung der Energieversorgungsvorrichtung 20 führt dann dazu, dass die Einheit 70 aus männlichem Kontaktpartner 50 und weiblichem Kontaktpartner 40 genügend Spiel hat, um nicht an die Grenzwände des Bewegungsraums anzustoßen. Dadurch ergibt sich eine Entkopplung der Energieversorgungsvorrichtung 20 von der Einheit 70 aus männlichem Kontaktpartner 50 und weiblichem Kontaktpartner 40, wodurch die Einheit 70 aus männlichem Kontaktpartner 50 und weiblichem Kontaktpartner 40 besonders gut geschützt wird. Der stabile Kontakt zwischen den Kontaktpartnern 40, 50 führt dazu, dass besonders hohe Ströme von der Energieversorgungsvorrichtung 20 an die Werkzeugmaschine 10 fließen können. Dies folgt insbesondere daraus, dass der Übergangswiderstand zwischen den Kontaktpartnern 40, 50 mit der Erfindung erheblich reduziert werden kann, so dass insbesondere auch die in einem Kontaktbereich 32 (siehe Fig. 4) zwischen den Kontaktpartnern 40, 50 gemessene Temperaturen weniger stark ansteigen als bei konventionellen Schnittstellen, wie sie aus dem Stand der Technik bekannt sind. Durch den reduzierten Übergangswiderstand und die reduzierten Temperaturen im Kontaktbereich 32 der Schnittstelle 30 verlängern sich erfreulicherweise die Lebensdauer der vorgeschlagenen Schnittstelle 30.

Auch wenn in Fig. 2 dargestellt ist, dass die männlichen Kontaktpartner 50 an der Werkzeugmaschine 10 angeordnet vorliegen und die weiblichen Kontaktpartner 40 an der Energieversorgungsvorrichtung 20, so kann auch eine gespiegelte Anordnung möglich sein, bei der die männlichen Kontaktpartner 50 an der Energieversorgungsvorrichtung 20 angeordnet vorliegen und die weiblichen Kontaktpartner 40 an der Werkzeugmaschine 10. Insbesondere kann es im Sinne der Erfindung auch bevorzugt sein, dass die männlichen Kontaktpartner 50 angefedert sind, d.h. mit einem elastischen Mittel 60 zur Reduzierung eines Relativwegs verbunden vorliegen.

Fig. 3 zeigt eine mögliche Ausgestaltung der Oberseite einer Energieversorgungsvorrichtung 20 einer bevorzugten Ausgestaltung des vorgeschlagenen Systems 100. Dargestellt sind vier weibliche Kontaktpartner 40, die in einer Aufnahmevorrichtung 80 angeordnet vorliegen. In einem nicht dargestellten Ausführungsbeispiel der Erfindung kann die Aufnahmevorrichtung 80 auch männliche Kontaktpartner 50 oder männliche Kontaktpartner 50 und weibliche Kontaktpartner 40 aufnehmen. Die Aufnahmevorrichtung 80 ist insbesondere dazu eingerichtet, die Leistungs- oder Stromkontakte 40, 50 der Schnittstelle 30 aufzunehmen.

Fig. 4 zeigt eine mögliche Ausgestaltung einer Einheit 70 aus einem weiblichem Kontaktpartner 40 und einem männlichem Kontaktpartner 50. Dargestellt ist in Fig. 4 insbesondere eine Schnittstelle 30, die einen weiblichen Kontaktpartner 40 und einen männlichen Kontaktpartner 50 aufweist. Insbesondere zeigt Fig. 4 einen verbundenen Zustand, bei dem die Energieversorgungsvorrichtung 20 und die Werkzeugmaschine 10 miteinander verbunden vorliegen, so dass Strom bzw. elektrische Energie von der Energieversorgungsvorrichtung 20 in Richtung der Werkzeugmaschine 10 fließen kann. Das Schwert 52 des männlichen Kontaktpartners 50 befindet sich in der Aufnahmeklemme 44 bzw. den Schenkeln 44 des weiblichen Kontaktpartners 40 angeordnet vor, wobei die Kontaktpartner 40, 50 miteinander einen Kontaktbereich 32 bilden, über den der Strom bzw. die elektrische Energie von der Energieversorgungsvorrichtung 20 an die Werkzeugmaschine 10 übertragen werden kann. Der Kontaktbereich 32 bildet sich insbesondere im Bereich einer Verjüngung 42 des weiblichen Kontaktpartners 40 aus, in dem die Schenkel 44 bzw. die Komponenten der Aufnahmeklemme 44 des weiblichen Kontaktpartners 40 einen minimalen Abstand zu einander einnehmen. Dadurch legen sich die Schenkel 44 des weiblichen Kontaktpartners 40 besonders eng an das Schwert 52 des männlichen Kontaktpartners 50 an. Dargestellt ist in Fig. 4 auch ein Kontaktbereich 32 der Schnittstelle 30, der mit einem Einzelkontaktpunkt 46 zusammenfallen kann.

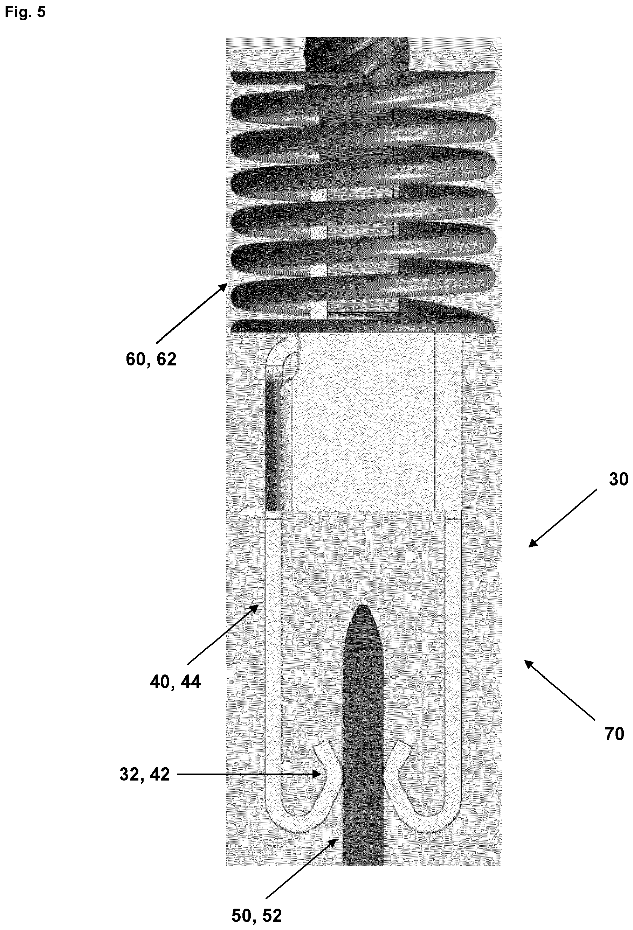

Fig. 5 zeigt eine weitere mögliche Ausgestaltung einer Einheit 70 aus einem weiblichem Kontaktpartner 40 und einem männlichem Kontaktpartner 50. Dargestellt ist in Fig. 5 insbesondere eine Schnittstelle 30, die einen weiblichen Kontaktpartner 40 und einen männlichen Kontaktpartner 50, sowie ein elastisches Mittel 60 zur Reduzierung des Relativwegs zwischen den Kontaktpartnern 40, 50 aufweist. Das Schwert 52 des männlichen Kontaktpartners 50 wird von einem Innenraum des weiblichen Kontaktpartners 40 aufgenommen, wobei dieser Innenraum von den Schenkeln 44 des weiblichen Kontaktpartners 40 gebildet wird. Der Kontakt zwischen den Kontaktpartnern 40, 50 besteht insbesondere in einem Kontaktbereich 32 der Schnittstelle 30, der bei dem in Fig. 5 dargestellten Ausführungsbeispiel der Erfindung im Bereich des geringsten Abstandes zwischen den Schenkeln 44 des weiblichen Kontaktpartners 40 angeordnet ist.

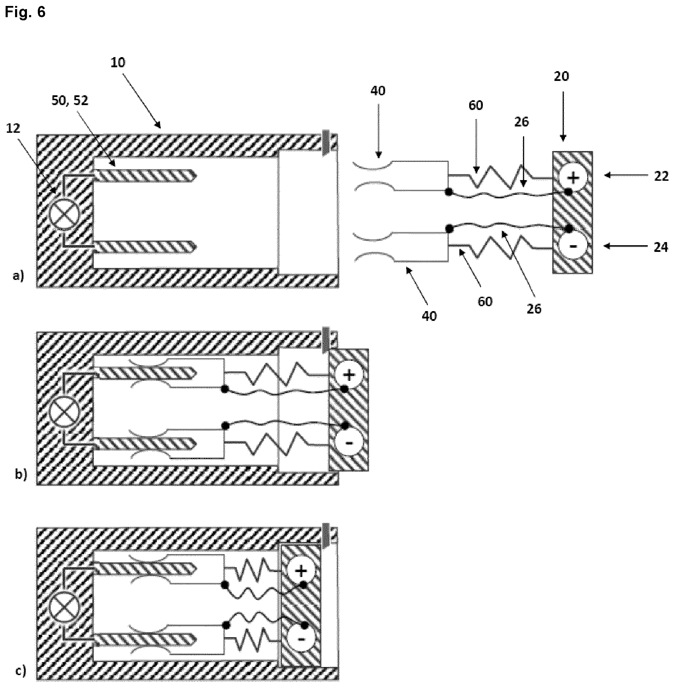

Fig. 6 zeigt einen möglichen Ablauf der Verbindung von Energieversorgungsvorrichtung 20 und Werkzeugmaschine 10. Fig. 6 umfasst drei Teilfiguren a), b) und c), wobei Teilfigur 6a) die Energieversorgungsvorrichtung 20 und Werkzeugmaschine 10 in einem getrennten Zustand zeigt, in dem die Energieversorgungsvorrichtung 20 und Werkzeugmaschine 10 getrennt voneinander vorliegen. Teilfigur 6b) zeigt Energieversorgungsvorrichtung 20 und Werkzeugmaschine 10 in dem Moment, in dem die Kontaktpartner 40, 50 der Energieversorgungsvorrichtung 20 und der Werkzeugmaschine 10 zusammen- oder aufeinandergeschoben vorliegen, wobei die elastischen Mittel 60 zur Anfederung in dem in Fig. 6b) gezeigten Zustand noch nicht elastisch verformt sind. Das bedeutet, dass die elastischen Mittel 60 zur Anfederung in dem in Fig. 6b) gezeigten Zustand noch nicht gespannt sind, so dass noch keine Anfederung der Kontaktpartner 40, 50 vorliegt. In Teilfigur 6c) ist zu erkennen, dass die elastischen Mittel 60 zur Anfederung nun zusammengedrückt, d.h. gespannt sind. Dieser Zustand entspricht vorzugsweise dem verriegelten Zustand, in dem die Energieversorgungsvorrichtung 20 und die Werkzeugmaschine 10 miteinander verbunden sind und in dem die Energieversorgungsvorrichtung 20 die Werkzeugmaschine 10 mit elektrischer Energie versorgen kann.

Die Energieversorgungsvorrichtung 20 weist einen Pluspol 22 und einen Minuspol 24 auf, wobei je ein Pol 22, 24 über je einen Stromleiter 26 mit einem Kontaktpartner, hier einem weiblichen Kontaktpartner 50, verbunden vorliegen kann. Bei den Stromleitern 26 kann es sich vorzugsweise um eine elastische Stromverbindung 26 zwischen den in dem in Fig. 6 angefederten weiblichen Kontaktpartnern 40 und der Energieversorgungseinheit 20 handeln. Ein elastisch ausgebildeter Stromleiter 26 ist vorteilhafterweise besonders gut dazu geeignet, die Beweglichkeit der Kontaktpartner 40, 50 zu unterstützen, so dass eine optimale Entkopplung der Kontaktpartner 40, 50 gewährleistet werden kann. Es kann im Sinne der Erfindung bevorzugt sein, dass der bevorzugt elastisch ausgebildete Stromleiter 26 eine Zopflitze umfasst oder von ihr gebildet wird. Vorzugsweise umfasst der bevorzugt elastisch ausgebildete Stromleiter 26 mehrere Einzeldrähte, die vorzugsweise miteinander verzwirbelt vorliegen können. Beispielsweise kann es im Sinne der Erfindung bevorzugt sein, dass der bevorzugt elastisch ausgebildete Stromleiter 26 mehr als zehn Einzeldrähte aufweist. Die elastischen Mittel 60 zur Anfederung verbinden vorzugsweise die Kontaktpartner, hier die weiblichen Kontaktpartner 50, mit der Energieversorgungsvorrichtung 20. Die Werkzeugmaschine 10 kann einen Verbraucher 12 aufweisen, bei dem es sich beispielsweise um den Motor 12 der Werkzeugmaschine 10 handeln kann. Die Bezugszeichen sind in Fig. 6 nur für Teilfigur 6a) angegeben, gelten aber für die Teilfiguren 6b) und 6c) analog.

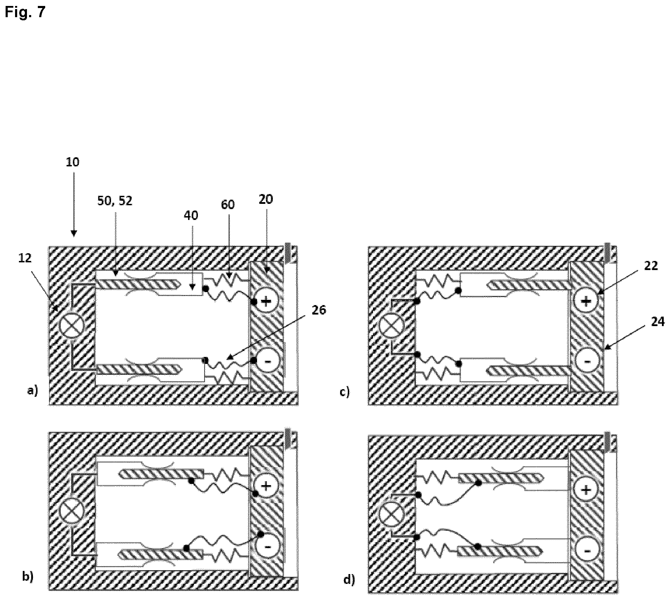

Fig. 7 zeigt verschiedene Kombinationen von Anfederungen und Anordnungen der Kontaktpartner 40, 50. Fig. 7 umfasst vier Teilfiguren a), b), c) und d), wobei bei dem in Teilfigur 7a) dargestellten Ausführungsbeispiel der Erfindung zwei männliche Kontaktpartner 50 mit ihren Schwertern 52 an der Werkzeugmaschine 10 angeordnet vorliegen. Die Werkzeugmaschine 10 kann einen Verbraucher 12, zum Beispiel einen Motor, umfassen. Die Teilfiguren von Fig. 7 zeigen die Werkzeugmaschine 10 und die Energieversorgungsvorrichtung 20 jeweils im verbundenen Zustand. Bei dem in Teilfigur 7a) dargestellten Ausführungsbeispiel der Erfindung liegen die weiblichen Kontaktpartner 50 an der Energieversorgungsvorrichtung 20 vor, wobei die dargestellte Energieversorgungsvorrichtung 20 insbesondere zwei weibliche Kontaktpartner 50 aufweist. In dem in Teilfigur 7a) dargestellten Ausführungsbeispiel der Erfindung korrespondiert somit die Anzahl der weiblichen Kontaktpartner 50 mit der Anzahl der männlichen Kontaktpartner 40. Das bedeutet in diesem Zusammenhang vorzugsweise, dass die Werkzeugmaschine 10 und die Energieversorgungsvorrichtung 20 gleich viele Kontaktpartner 40, 50 aufweisen, wobei die in Teilfigur 7a) abgebildete Werkzeugmaschine 10 zwei männliche Kontaktpartner 50 und die in Teilfigur 7a) abgebildete Energieversorgungsvorrichtung 20 zwei weibliche Kontaktpartner 40 aufweist. Die Energieversorgungsvorrichtung 20 weist zwei Pole 22, 24 auf, nämlich einen Pluspol 22 und einen Minuspol 24. Die Pole 22, 24 der Energieversorgungsvorrichtung 20 sind über je einen bevorzugt elastisch ausgebildeten Stromleiter 26 mit den Kontaktpartnern 40 verbunden, wobei die Kontaktpartner der Energieversorgungsvorrichtung 20 in Teilfigur 6a) weibliche Kontaktpartner 40 sind. In dem in Teilfigur 7a) dargestellten Ausführungsbeispiel der Erfindung liegt die Anfederung im Bereich, d.h. auf Seiten der Energieversorgungsvorrichtung 20 vor. In den in den Teilfigur 7a) und 7d) dargestellten Ausführungsbeispielen der Erfindung liegen die männlichen Kontaktpartner 50 jeweils an der Werkzeugmaschine 10, während die weiblichen Kontaktpartner 40 mit der Energieversorgungsvorrichtung 20 verbunden vorliegen. Die Bezugszeichen sind in Fig. 7 nur für Teilfigur 77a) angegeben, gelten aber für die übrigen Teilfiguren der Figur 7 analog.

Teilfigur 7b) zeigt ein Ausführungsbeispiel der Erfindung, bei dem die Werkzeugmaschine 10 weibliche Kontaktpartner 40 aufweist und die Energieversorgungsvorrichtung 20 männliche Kontaktpartner 50. Auch hier weisen sowohl Werkzeugmaschine 10, als auch Energieversorgungsvorrichtung 20 jeweils zwei Kontaktpartner 40, 50 auf. Die Schwerter 52 der männlichen Kontaktpartner 50 sind in dem in Teilfigur 7b) dargestellten Ausführungsbeispiel der Erfindung jeweils über ein elastisches Mittel 60 zur Anfederung mit der Energieversorgungsvorrichtung 20 verbunden, während die Schwerter darüber hinaus elektrisch über einen Stromleiter 26 mit je einem Pol 22, 24 der Energieversorgungsvorrichtung 20 verbunden vorliegen. Auch in dem in Teilfigur 7b) dargestellten Ausführungsbeispiel der Erfindung liegt die Anfederung im Bereich, d.h. auf Seiten der Energieversorgungsvorrichtung 20 vor.

In den in den Teilfigur 7c) und 7d) dargestellten Ausführungsbeispielen der Erfindung liegt die Anfederung jeweils im Bereich, d.h. auf Seiten der Werkzeugmaschine 10 vor. Teilfigur 7c) zeigt ebenfalls ein Ausführungsbeispiel der Erfindung, bei dem die Werkzeugmaschine 10 weibliche Kontaktpartner 40 aufweist und die Energieversorgungsvorrichtung 20 männliche Kontaktpartner 50 aufweist. Die weiblichen Kontaktpartner 40 sind über einen Stromleiter 26 leitend mit der Werkzeugmaschine 10 verbunden, wobei die elektrische Verbindung insbesondere zwischen den weiblichen Kontaktpartnern 40 und dem Verbraucher 12 der Werkzeugmaschine 10 besteht. Die weiblichen Kontaktpartner 40 sind darüber hinaus über elastische Mittel 60 zur Anfederung mit der Werkzeugmaschine 10 verbunden. Im Bereich der Energieversorgungsvorrichtung 20 sind die männlichen Kontaktpartner 50, insbesondere ihre Schwerter 52, mit je einem Pol 22, 24 der Energieversorgungsvorrichtung 20 verbunden. Die Energieversorgungsvorrichtung 20 weist zwei männliche Kontaktpartner 50 auf, wobei jedem Pol 22, 24 der Energieversorgungsvorrichtung 20 genau ein männlicher Kontaktpartner 50 zugeordnet werden kann.

Teilfigur 7d) zeigt ein Ausführungsbeispiel der Erfindung, bei dem die Werkzeugmaschine 10 männliche Kontaktpartner 50 aufweist und die Energieversorgungsvorrichtung 20 weibliche Kontaktpartner 40 aufweist. Die Anfederung, d.h. die elastischen Mittel 60 zur Anfederung, liegt bei dem in Teilfigur 7d) dargestellten Ausführungsbeispiel der Erfindung im Bereich der Werkzeugmaschine 10 vor. Die Werkzeugmaschine 10 ist über die elastischen Mittel 60 zur Anfederung mit je einem männlichen Kontaktpartner 50 bzw. seinem Schwert 52 verbunden. Darüber hinaus besteht bei dem in Teilfigur 7d) dargestellten Ausführungsbeispiel der Erfindung eine stromleitende Verbindung zwischen dem Verbraucher 12 der Werzeugmaschine 10 und den männlichen Kontaktpartnern 50. Die stromleitende Verbindung zwischen dem Verbraucher 12 der Werzeugmaschine 10 und den männlichen Kontaktpartnern 50 kann insbesondere von einem Stromleiter 26 bewirkt werden. Die Energieversorgungsvorrichtung 20 bei dem in Teilfigur 7d) dargestellten Ausführungsbeispiel der Erfindung zwei weibliche Kontaktpartner 40 auf, wobei je ein weiblicher Kontaktpartner 40 der Energieversorgungsvorrichtung 20 einem der beiden Pole 22, 24 der Energieversorgungsvorrichtung 20 zugeordnet werden kann.

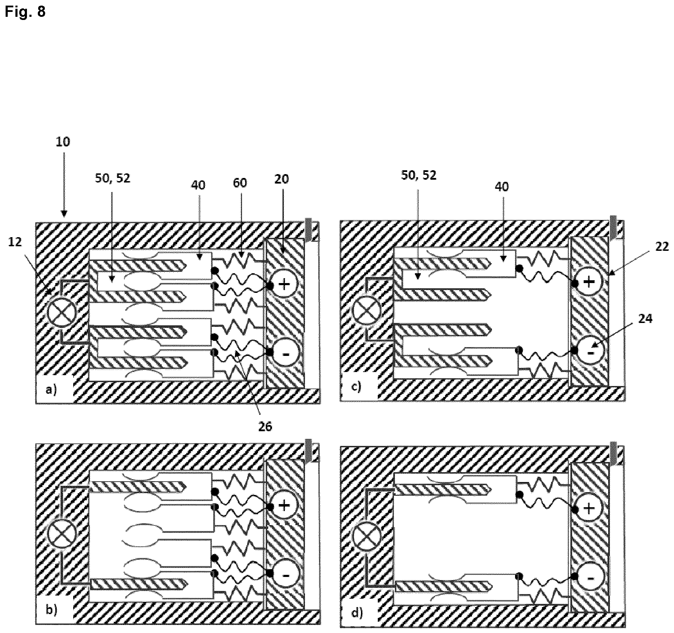

Fig. 8 zeigt verschiedene Anordnungen der Kontaktpartner 40, 50 und ihre Belegungen. Fig. 8 umfasst vier Teilfiguren a), b), c) und d), wobei bei dem in Teilfigur 8a) eine Werkzeugmaschine 10 mit vier männlichen Kontaktpartner 50 und eine Energieversorgungsvorrichtung 20 mit vier weiblichen Kontaktpartnern 40 dargestellt ist. Die männlichen Kontaktpartner 50 der Werkzeugmaschine 10 sind leitend mit einem Verbraucher 12 der Werkzeugmaschine 10 verbunden, um diesen mit elektrischer Energie, die die Werkzeugmaschine 10 der Energieversorgungsvorrichtung 20 erhält, zu versorgen. Die weiblichen Kontaktpartner 40 der Energieversorgungsvorrichtung 20 sind über je einen Stromleiter mit einem Pol 22, 24 der Energieversorgungsvorrichtung 20 verbunden, wobei in dem in Teilfigur 8a) dargestellten Ausführungsbeispiel der Erfindung zwei weibliche Kontaktpartner 40 mit dem Pluspol 22 der Energieversorgungsvorrichtung 20 und zwei andere weibliche Kontaktpartner 40 mit dem Minuspol 24 der Energieversorgungsvorrichtung 20 verbunden sind. Darüber hinaus sind die weiblichen Kontaktpartner 40 über die ein elastisches Mittel 60 zur Anfederung mit der Energieversorgungsvorrichtung 20 verbunden. Die Anfederung erfolgt in allen Teilfiguren der Fig. 8 auf Seiten der Energieversorgungsvorrichtung 20. Darüber hinaus ist allen Teilfiguren der Fig. 8 gemein, dass die männlichen Kontaktpartner 50 an der Werkzeugmaschine 10 vorliegen, während die weiblichen Kontaktpartner 40 an der Energieversorgungsvorrichtung 20 angeordnet vorliegen. Die Teilfiguren der Figuren 8 unterscheiden sich allerdings in der Anzahl der jeweils vorhandenen Kontaktpartner 40, 50 und der Anzahl der Stromübertragungs-Paare, die jeweils gebildet werden können. In dem in Teilfigur 8a) dargestellten Ausführungsbeispiel der Erfindung sind beispielsweise vier Stromübertragungs-Paare aus je einem weiblichen Kontaktpartner 40 und einem männlichen Kontaktpartner 50 abgebildet. Bei vier Stromübertragungs-Paaren kann ein Potential der Energieversorgungsvorrichtung 20 besonders gut genutzt und eine große Menge elektrische Energie von der Energieversorgungsvorrichtung 20 an die Werkzeugmaschine 10 übertragen werden. Beispielsweise können Ströme von mehr als 50 A, bevorzugt mehr als 70 A und am meisten bevorzugt von mehr als 100 A mit einer solchen Schnittstelle 30 übertragen werden. Bei den Strömen handelt es sich vorzugsweise um Konstant-Ströme. Die Bezugszeichen sind in Fig. 8 nur für Teilfigur 8a) angegeben, gelten aber für die übrigen Teilfiguren der Figur 8 analog

In dem in Teilfigur 8b) dargestellten Ausführungsbeispiel der Erfindung sind beispielsweise zwei Stromübertragungs-Paare aus je einem weiblichen Kontaktpartner 40 und einem männlichen Kontaktpartner 50 abgebildet, während zwei weibliche Kontaktpartner 40 der Energieversorgungsvorrichtung 20 nicht belegt sind, d.h. ungenutzt oder «leer» bleiben. Bei dem in Teilfigur 8b) dargestellten Ausführungsbeispiel der Erfindung kann aufgrund der geringeren Anzahl von Stromübertragungs-Paaren weniger Strom von der Energieversorgungsvorrichtung 20 an die Werkzeugmaschine 10 übertragen werden als bei dem in Teilfigur 8a) dargestellten Ausführungsbeispiel der Erfindung, bei dem die Schnittstelle 30 vier Stromübertragungs-Paare umfasst. Bei dem in Teilfigur 8b) dargestellten Ausführungsbeispiel der Erfindung weist die Energieversorgungsvorrichtung 20 vier weibliche Kontaktpartner 40 auf, aber die Werkzeugmaschine 10 lediglich zwei männliche Kontaktpartner 50.

In dem in Teilfigur 8c) dargestellten Ausführungsbeispiel der Erfindung sind ebenfalls zwei Stromübertragungs-Paare aus je einem weiblichen Kontaktpartner 40 und einem männlichen Kontaktpartner 50 abgebildet, während zwei männliche Kontaktpartner 50 der Werkzeugmaschine 10 nicht mit einem weiblichen Kontaktpartner 40 verbunden sind. Bei dem in Teilfigur 8c) dargestellten Ausführungsbeispiel der Erfindung kann aufgrund der geringeren Anzahl von Stromübertragungs-Paaren weniger Strom von der Energieversorgungsvorrichtung 20 an die Werkzeugmaschine 10 übertragen werden als bei dem in Teilfigur 8a) dargestellten Ausführungsbeispiel der Erfindung, bei dem die Schnittstelle 30 vier Stromübertragungs-Paare umfasst. Bei dem in Teilfigur 8c) dargestellten Ausführungsbeispiel der Erfindung weist die Werkzeugmaschine 10 vier männliche Kontaktpartner 50 auf, aber die Energieversorgungsvorrichtung 20 lediglich zwei weibliche Kontaktpartner 40.

Bei dem in Teilfigur 8d) dargestellten Ausführungsbeispiel der Erfindung weist die Werkzeugmaschine 10 zwei männliche Kontaktpartner 50 auf und die Energieversorgungsvorrichtung 20 zwei weibliche Kontaktpartner 40. Dadurch können zwei dargestellten Ausführungsbeispiel der Erfindung sind beispielsweise zwei Stromübertragungs-Paare gebildet werden und die Menge der zu übertragenden Energie bzw. die Größe der Ströme, die übertragen werden kann, entspricht den in den Teilfigur 8b) und 8c) dargestellten Ausführungsbeispielen der Erfindung.

Bei den in den Fig. 6 bis 8 dargestellten Ausführungsbeispielen der Erfindung wird jeweils eine Einzel-Anfederung gezeigt, d.h. dass auf Seiten des Verbindungspartners der Schnittstelle 30, bei dem die Anfederung erfolgt, jeder Kontaktpartner 40, 50 ein elastisches Mittel 60 zur Anfederung aufweist. Das bedeutet, dass die Kontaktpartner 40, 50 einzeln angefedert sind.

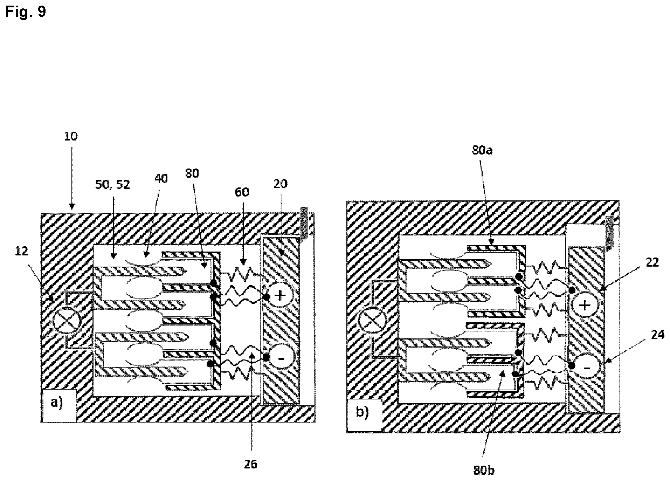

In Fig. 9 sind Aufnahmevorrichtungen 80 dargestellt, die bei dem in Teilfigur 9a) dargestellten Ausführungsbeispiel der Erfindung die vier weiblichen Kontaktpartner 40 der Energieversorgungsvorrichtung 20 umfasst. Die weiblichen Kontaktpartner 40 liegen in bekannter Weise mit den Schwertern 52 der männlichen Kontaktpartner 50 wirkverbunden vor, so dass Stromübertragungs-Paare gebildet werden, wobei in dem in Teilfigur 9a) dargestellten Ausführungsbeispiel der Erfindung vier Stromübertragungs-Paare 70 gebildet werden. Die in Teilfigur 9a) dargestellte Aufnahmevorrichtung 80 ist Bestandteil der Energieversorgungsvorrichtung 20 und über vier Stromleiter 26 mit den Polen 22, 24 der Energieversorgungsvorrichtung 20 verbunden, sowie mechanisch über zwei elastische Mittel 60 zur Anfederung mit der Energieversorgungsvorrichtung 20. Die Aufnahmevorrichtung 80 bildet vorzugsweise einen Kontaktblock, der mit einer bestimmten Anzahl elastischer Mittel 60 zur Anfederung als Block angefedert werden kann.

Bei dem in Teilfigur 9b) dargestellten Ausführungsbeispiel der Erfindung sind zwei Aufnahmevorrichtungen 80 dargestellt, wobei je zwei weibliche Kontaktpartner 40 in einer Aufnahmevorrichtung 80 vorliegen. Jede der beiden Aufnahmevorrichtungen 80 ist über zwei elastische Mittel 60 zur Anfederung mit der Energieversorgungsvorrichtung 20 verbunden, sowie mit zwei Stromleitern 26 mit den Polen 22, 24 der Energieversorgungsvorrichtung 20. Dabei stellen je zwei Stromleiter 26 eine Verbindung zwischen dem Pluspol 22 der Energieversorgungsvorrichtung 20 und der ersten Aufnahmevorrichtung 80a her, während zwei andere Stromleiter 26 die Verbindung zwischen dem Minuspol 24 der Energieversorgungsvorrichtung 20 und der zweiten Aufnahmevorrichtung 80b herstellen. Die Bezugszeichen sind in Fig. 9 nur für Teilfigur 9a) angegeben, gelten aber für die übrigen Teilfiguren der Figur 9 analog.

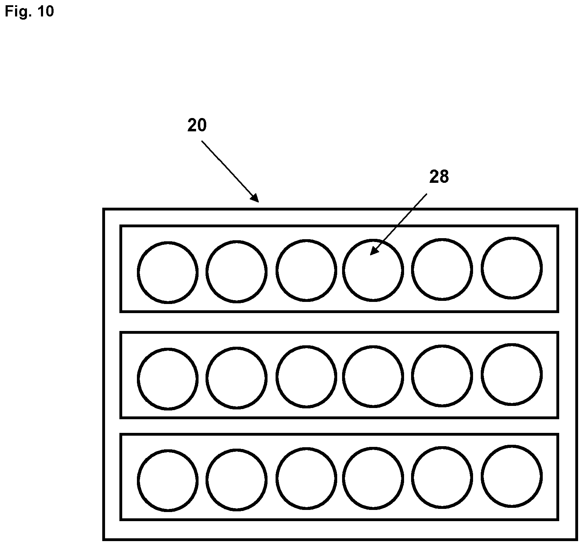

Figur 10 zeigt eine schematische Seitenansicht einer bevorzugten Ausgestaltung der Energieversorgungsvorrichtung 20. Die in Fig. 10 dargestellte Energieversorgungsvorrichtung 20 weist achtzehn Zellen 28 auf, wobei die achtzehn Zellen 28 in drei Strängen innerhalb der Energieversorgungsvorrichtung 20 angeordnet vorliegen. Die Zellen 28 werden insbesondere durch die Kreise symbolisiert, während die Stränge durch die länglichen Rechtecke symbolisiert werden, die die Kreise («Zellen 28») umgeben.

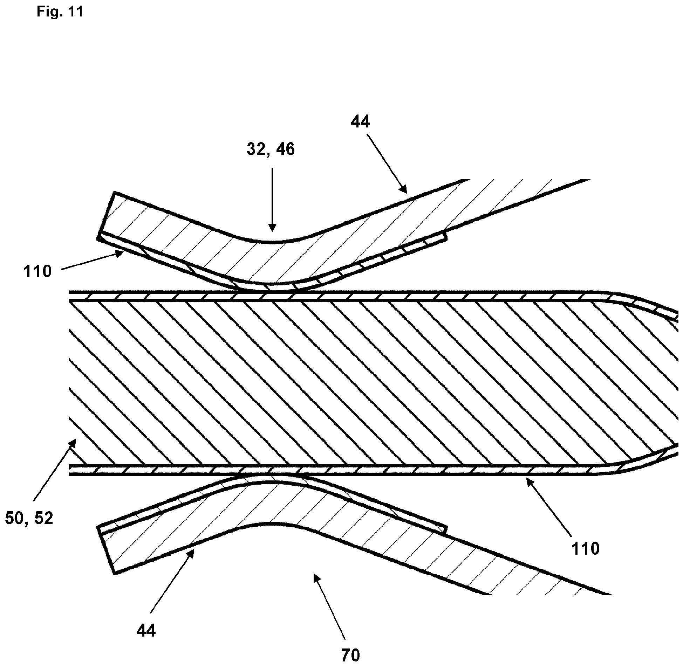

Figur 11 zeigt eine schematische Seitenansicht einer bevorzugten Ausgestaltung eines Stromübertragungs-Paares 70 mit einer ersten Beschichtung 110. Das Stromübertragungs-Paar 70 umfasst vorzugsweise einen männlichen Kontaktpartner 50 mit einem Schwert 52, sowie einen weiblichen Kontaktpartner 40 mit mindestens einem Kontaktarm 44. Die erste Beschichtung 110 liegt vorzugsweise sowohl auf einer Oberfläche 140 des männlichen Kontaktpartners 50, als auch auf einer Oberfläche 140 des weiblichen Kontaktpartners 40 vor. Die Oberfläche 140 des weiblichen Kontaktpartners 40 kann vorzugsweise von Innenseiten der Kontaktarme 44 des weiblichen Kontaktpartners 40 gebildet werden. Die erste Beschichtung 110 und auch die in Fig. 11 nicht dargestellte zweite Beschichtung 120 liegen vorzugsweise im Bereich des Kontaktbereichs 32 der Schnittstelle 30 vor, wobei in diesem Kontaktbereich 32 der Schnittstelle 30 vorzugsweise auch die Einzelkontaktpunkte 46 der Kontaktpartner 40, 50 liegen.

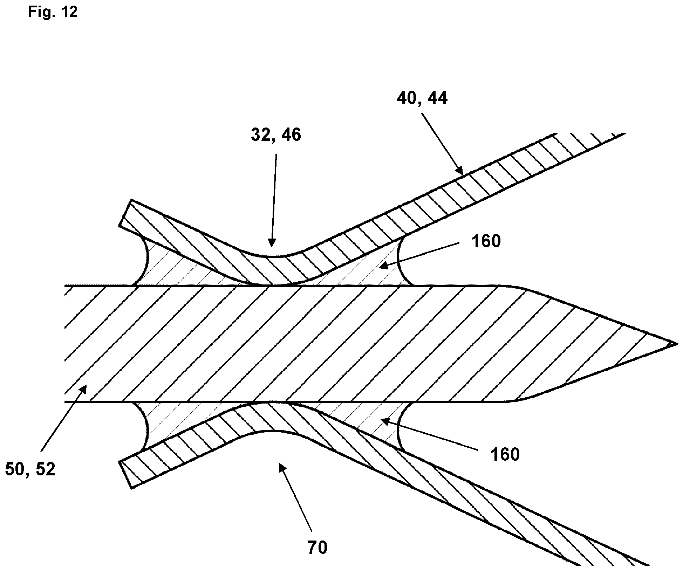

Figur 12 zeigt eine schematische Seitenansicht einer bevorzugten Ausgestaltung eines Stromübertragungs-Paares 70 mit einem Schmiermittel 160. Das Stromübertragungs-Paar 70 umfasst vorzugsweise einen männlichen Kontaktpartner 50 mit einem Schwert 52, sowie einen weiblichen Kontaktpartner 40 mit mindestens einem Kontaktarm 44. Das Schmiermittel 160 liegt vorzugsweise ebenfalls in dem Kontaktbereich 32 der Schnittstelle 30 angeordnet vor, wobei dort vorzugsweise auch die Einzelkontaktpunkte 46 der Kontaktpartner 40, 50 angeordnet vorliegen.

Figur 13 zeigt eine schematische Seitenansicht einer bevorzugten Ausgestaltung eines Stromübertragungs-Paares 70 mit einer Mikrostrukturierung 150. Das Stromübertragungs-Paar 70 umfasst vorzugsweise einen männlichen Kontaktpartner 50 mit einem Schwert 52, sowie einen weiblichen Kontaktpartner 40 mit mindestens einem Kontaktarm 44. In Fig. 13 sind vier Einzelkontaktpunkte mit dem Bezugszeichen 46 versehen. Diese vier Einzelkontaktpunkte 46 werden von dem oberen der beiden Kontaktarme 44 des weiblichen Kontaktpartners 40 gebildet. Da der weibliche Kontaktpartner 40 zwei Kontaktarme 44 umfasst, liegen auch unterhalb des Schwerts 52 des männlichen Kontaktpartners 50 vier weitere, nicht eingezeichnete Einzelkontaktpunkte 46. Insgesamt weist das in Fig. 13 abgebildete Stromübertragungs-Paar 70 acht Einzelkontaktpunkte 46. Die in Fig. 13 dargestellte bevorzugte Ausgestaltung der Mikrostrukturierung 150 liegt vorzugsweise auf einer Oberseite 140 des männlichen Kontaktpartners 50 bzw. auf einer Oberseite 140 seines Schwerts 52 vor. Es kann allerdings im Sinne der Erfindung auch bevorzugt sein, dass die Mikrostrukturierung 150 auf einer Oberseite 140 des weiblichen Kontaktpartners 40 vorliegt, insbesondere auf den Innenseiten der Schenkel 44 des weiblichen Kontaktpartners 40. Wie aus Fig. 13 hervorgeht, ist die dargestellte Mikrostrukturierung 150 periodisch wiederkehrend ausgestaltet, d.h. die Mikrostrukturierung 150 weist periodisch wiederkehrende Muster und Strukturen auf, die vorzugsweise die Mikrostrukturierung 150 bilden.

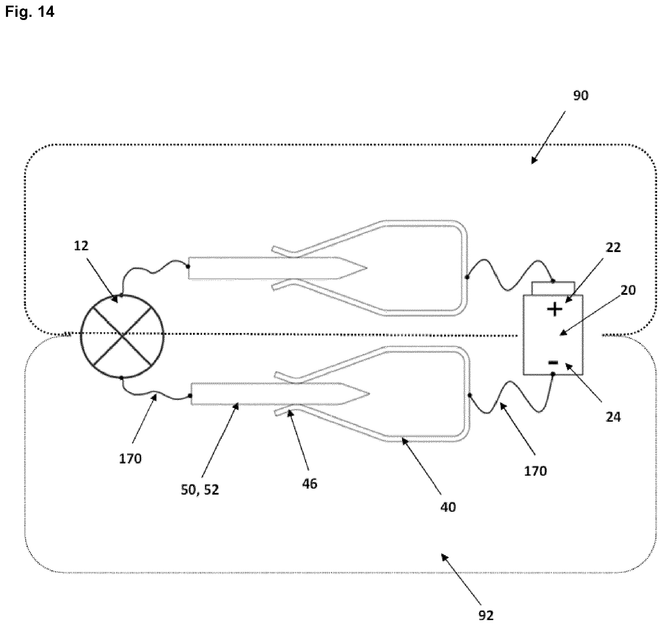

Fig. 14 zeigt ein Ausführungsbeispiel der Erfindung, insbesondere ein System 100, das eine Werkzeugmaschine 10 und eine Energieversorgungsvorrichtung 20 umfasst. Dargestellt ist insbesondere ein Ausführungsbeispiel der Erfindung, bei dem jeder Pol 22, 24 der Energieversorgungsvorrichtung 20 mit je einem Stromübertragungs-Paar 70 verbunden ist. In dem in Fig. 14 abgebildeten Ausführungsbeispiel der Erfindung sind die Pole 22, 24 der Energieversorgungsvorrichtung 20 über je einen Stromleiter 26 oder Litzen 170 mit je einem weiblichen Kontaktpartner 40 verbunden, wobei dieser weibliche Kontaktpartner 40 mit einem männlichen Kontaktpartner 50 verbunden werden kann, um ein Stromübertragungs-Paar 70 zu bilden. In dem in Fig. 14 abgebildeten Ausführungsbeispiel der Erfindung weisen die weiblichen Kontaktpartner 40 zwei Schenkel 44 oder Kontaktarme 44 auf, wobei die Schenkel 44 oder Kontaktarme 44 des weiblichen Kontaktpartners 40 im Verbindungsfall auf je einer Seite des Schwerts 52 eines männlichen Kontaktpartners 50 anliegen. Dadurch werden vorzugsweise zwei Einzelkontaktpunkte 46 gebildet, nämlich auf jeder Seite des Schwerts 52 bzw. pro Schenkel 44 oder Kontaktarm 44 ein Einzelkontaktpunkt 46.

In dem in Fig. 14 abgebildeten Ausführungsbeispiel der Erfindung kann Strom oder elektrische Energie entlang von zwei Strompfaden 90, 92 fließen. Ein erster Strompfad 90 erstreckt sich vorzugsweise von dem Pluspol 22 der Energieversorgungsvorrichtung 20 in Richtung der Werkzeugmaschine 10, insbesondere in Richtung des Verbrauchers 12 der Werkzeugmaschine 10. Mit anderen Worten ist der erste Strompfad 90 dazu eingerichtet, die Kathode 22 der Energieversorgungsvorrichtung 20 mit dem Verbraucher 12 der Werkzeugmaschine 10 zu verbinden. Ein zweiter Strompfad 92 erstreckt sich vorzugsweise von der Werkzeugmaschine 10, insbesondere von dem Verbraucher 12 der Werkzeugmaschine 10, in Richtung der Energieversorgungsvorrichtung 20, insbesondere in Richtung des Minuspols 24 der Energieversorgungsvorrichtung 20. Mit anderen Worten ist der zweite Strompfad 92 dazu eingerichtet, den Verbraucher 12 der Werkzeugmaschine 10 mit der Anode 24 der Energieversorgungsvorrichtung 20 zu verbinden. Die Übertragung der elektrischen Energie bzw. des Stroms erfolgt vorzugsweise über die Stromübertragungs-Paare 70, wobei in dem in in Fig. 14 abgebildeten Ausführungsbeispiel der Erfindung jeder Pol 22, 24 der Energieversorgungsvorrichtung 20 mit je einem Stromübertragungs-Paar 70 verbunden ist. Dadurch weist jeder der beiden Strompfade 90, 92 genau ein Stromübertragungs-Paar 70 in der Schnittstelle 30 zwischen Werkzeugmaschine 10 und Energieversorgungsvorrichtung 20 auf.

Das Stromübertragungs-Paar 70 umfasst einen männlichen Kontaktpartner 50 mit einem Schwert 52 und einen weiblichen Kontaktpartner 40 mit Kontaktarmen 44 oder Schenkeln 44, wobei die Kontaktarme 44 oder Schenkel 44 des weiblichen Kontaktpartners 40 im Einzelkontaktpunkt 46 in Kontakt mit dem Schwert 52 des männlichen Kontaktpartners vorliegen. Die Kontaktpartner 40, 50 können über Verbindungsleitungen 170 mit der Energieversorgungsvorrichtung 20 oder der Werkzeugmaschine 10 verbunden werden.

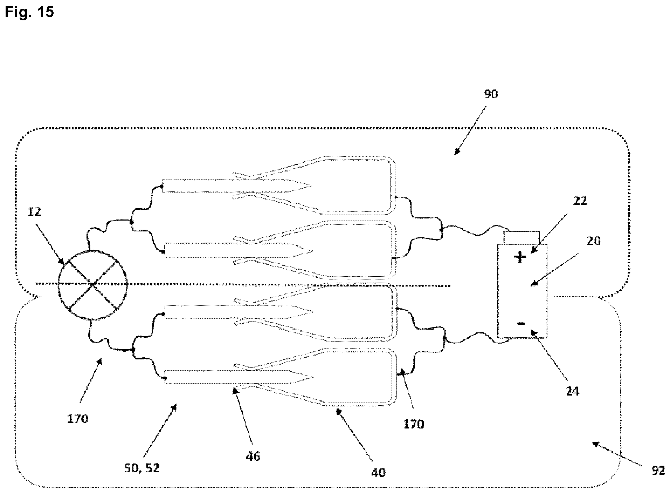

Fig. 15 zeigt ein Ausführungsbeispiel der Erfindung, insbesondere ein System 100, das eine Werkzeugmaschine 10 und eine Energieversorgungsvorrichtung 20 umfasst, wobei den Polen 22, 24 der Energieversorgungsvorrichtung 20 mehr als ein Stromübertragungs-Paar 70 zugeordnet werden kann. In dem in Fig. 15 abgebildeten Ausführungsbeispiel der Erfindung können beispielsweise beiden Polen 22, 24 der Energieversorgungsvorrichtung 20 je zwei weibliche Kontaktpartner 40 bzw. zwei Stromübertragungs-Paare 70 zugeordnet werden.

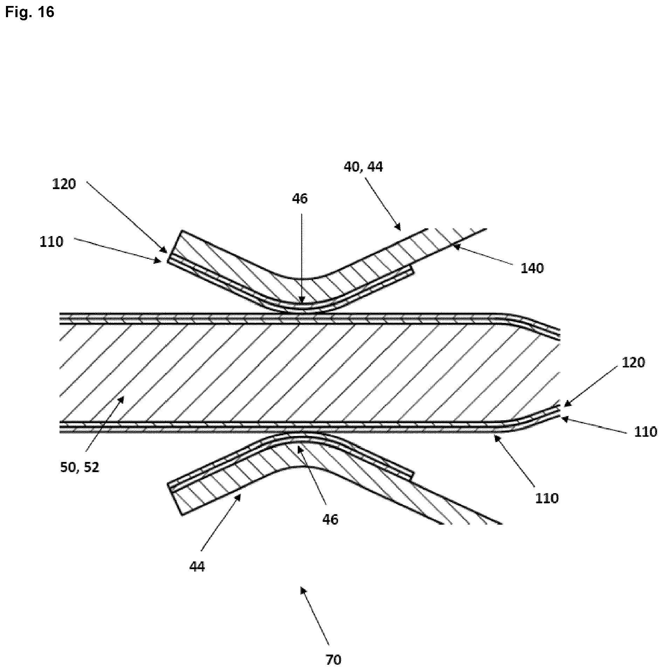

Figur 16 zeigt eine schematische Seitenansicht einer bevorzugten Ausgestaltung eines Stromübertragungs-Paares 70 mit einer ersten Beschichtung 110 und einer zweiten Beschichtung 120. Das Stromübertragungs-Paar 70 umfasst vorzugsweise einen männlichen Kontaktpartner 50 mit einem Schwert 52, sowie einen weiblichen Kontaktpartner 40 mit mindestens einem Kontaktarm 44. Die Beschichtungen 110, 120 liegen vorzugsweise sowohl auf einer Oberfläche 140 des männlichen Kontaktpartners 50, als auch auf einer Oberfläche 140 des weiblichen Kontaktpartners 40 vor. Die Oberfläche 140 des weiblichen Kontaktpartners 40 kann vorzugsweise von Innenseiten der Kontaktarme 44 des weiblichen Kontaktpartners 40 gebildet werden. In dem in Fig. 16 abgebildeten Ausführungsbeispiel der Erfindung berühren sich die Kontaktpartner 40, 50 mit der erste Beschichtung 110, wobei die erste Beschichtung 110 vorzugsweise eine äußere Beschichtung der Kontaktpartner 40, 50 darstellt. Die zweite Beschichtung 120 liegt vorzugsweise zwischen einer Oberfläche 140 des männlichen Kontaktpartners 50 und des weiblichen Kontaktpartners 40 vor und dient vorzugsweise dazu, die Haftung der ersten Beschichtung 110 auf der Oberfläche 140 der Kontaktpartner 40, 50 zu verbessern.

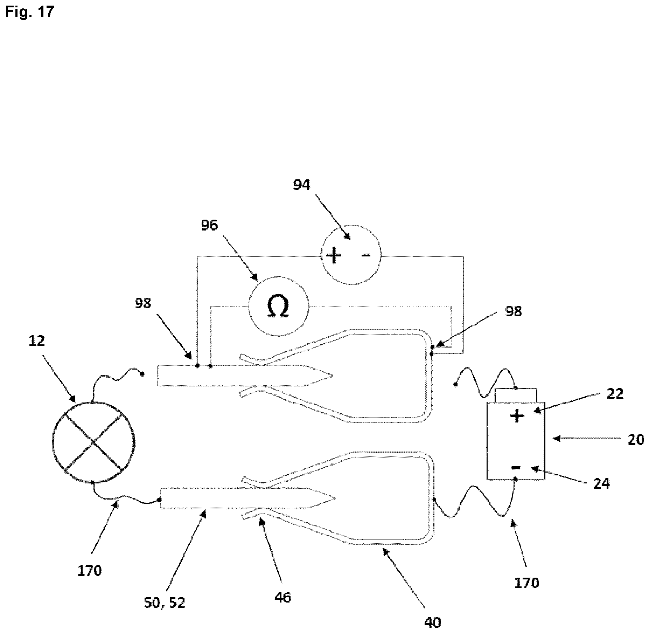

Fig. 17 zeigt einen möglichen Aufbau für die Messung eines Kontaktwiderstandes eines einzelnen Stromübertragungs-Paares 70. Dazu können die beiden Verbindungsleitungen 170 der Kontaktpartner 40, 50 zur Energieversorgungsvorrichtung 20 und der Werkzeugmaschine 10 getrennt werden, so daß nur der elektrische Widerstand des weiblichen Kontaktpartners 40 und des männlichen Kontaktpartners 50 im verbundenen Zustand gemessen wird. Mit anderen Worten kann eine Summe aus dem Widerstand des weiblichen Kontaktpartners 40 und des männlichen Kontaktpartners 50 gebildet und als Kontaktwiderstand des Stromübertragungs-Paares 70 bezeichnet werden.

In Fig. 17 wird auch gezeigt, an welchen Stellen des Stromübertragungs-Paares 70 Messleitungen an den Kontaktpartnern 40, 50 angebracht werden können, um eine Widerstandsmessung durchzuführen und auf diese Weise den elektrischen Gesamtübergangswiderstand der Schnittstelle 30 pro Pol 22, 24 zu ermitteln. Die entsprechenden Stellen an den Kontaktpartnern 40, 50, an denen die Messleitungen befestigt werden können, werden vorzugsweise als «Stromabgriffspunkte 98» bezeichnet. Eine Messung des elektrischen Gesamtwiderstands der Schnittstelle 30 bezieht sich im Kontext der vorliegenden Erfindung vorzugsweise auf jeweils einen Pol 22, 24 der Energieversorgungsvorrichtung 20, wobei es sich um den Pluspol 22 oder um den Minuspol 24 handeln kann. Mit anderen Worten kann der Widerstand der Stromübertragungs-Paare 70 in dem ersten Strompfad 90 zwischen der Kathode 22 der Energieversorgungsvorrichtung 20 und der Werkzeugmaschine 10 oder in dem zweiten Strompfad 92 zwischen der Werkzeugmaschine 10 und der Anode 24 der Energieversorgungsvorrichtung 20 gemessen werden.

Die Widerstandsmessung kann vorzugsweise ein dem Fachmann geläufiges Vierleiter-Messverfahren umfassen. Die Messung wird vorzugsweise bei Raumtemperatur in einem Temperaturbereich von 19 bis 23 °C durchgeführt, besonders bevorzugt bei einer Raumtemperatur von 21 °C. Beispielsweise kann ein arithmetisches Mittel aus zum Beispiel zehn Einzelmessungen für die Bestimmung des elektrischen Gesamtübergangswiderstands verwendet werden. Vorzugsweise können die Kontaktpartner 40, 50 vor Beginn der Messung zehn Mal und nach jeder Einzelmessung einmal miteinander verbunden werden. Es ist im Sinne der Erfindung bevorzugt, dass die Messleitungen, die mit einer Mess-Stromversorgungsvorrichtung 94 verbunden sind, und die Messleitungen, die mit einem Ohm-Meter 96 verbunden sind und für die Widerstandsmessung verwendet werden, getrennt voneinander zur Mess-Stelle geführt werden. Es ist im Sinne der Erfindung bevorzugt, dass die Mess-Stromversorgungsvorrichtung 94 einen Strom von 1 Ampère (A) abgibt. Das bedeutet im Sinne der Erfindung bevorzugt, dass die Messleitungen, die mit einer Mess-Stromversorgungsvorrichtung 94 verbunden sind, mit einem Messstrom von 1 A beaufschlag werden.

Die Stromabgriffspunkte 98, zwischen denen der Widerstand gemessen wird, liegen an den Kontaktpartnern 40, 50 des Stromübertragungs-Paares 70 angeordnet vor, vorzugsweise in enger räumlicher Nähe zu dem mindestens einen Einzelkontaktpunkt 46, an dem die Kontaktpartner 40, 50 in Kontakt miteinander vorliegen. Wenn die Pole 22, 24 der Energieversorgungsvorrichtung 20 mit je einem Kontaktpartner 40, 50 verbunden vorliegen, entspricht der Gesamtübergangswiderstand eines Einzelkontaktpartners 40, 50 dem Gesamtübergangswiderstand des Stromübertragungs-Paares 70 bzw. der Schnittstelle 30.

Fig. 18 zeigt den Messaufbau für eine Gesamtübergangswiderstandes bei mehreren Kontaktpartnern 40, 50 pro Pol 22, 24. Es ist es im Sinne der Erfindung bevorzugt, die Kontaktwiderstände R1, R2, ... Rn der Stromübertragungs-Paare 70 zu messen, wobei das Stromübertragungs-Paar 70 vorzugsweise je einen weiblichen Kontaktpartner 40 und einen männlichen Kontaktpartner 50 aufweist bzw. daraus besteht. Der elektrische Gesamtübergangswiderstand der Schnittstelle 30 pro Pol 22, 24 errechnet sich anhand der folgenden Formel

$$R_{ges}=1/(1/R_1+ 1/R_2+... 1/R_n),$$

die die Berechnung eines Gesamtwiderstandes aus der Summe der bevorzugt parallelgeschalteten Einzelwiderstände beschreibt. Der Index "n" steht dabei vorzugsweise für die Anzahl der Kontaktpartner 40, 50 pro Pol 22, 24. In dem in Fig. 18 abgebildeten Ausführungsbeispiel der Erfindung ist n = 2. Bei dem in Fig. 15 abgebildeten Ausführungsbeispiel der Erfindung wird die Messung des elektrischen Gesamtübergangswiderstands in dem oberen, d.h. dem ersten Strompfad 90 durchgeführt, wobei der erste Strompfad 90 den Pluspol 22 der Energieversorgungsvorrichtung 20 mit der Werkzeugmaschine 10 verbindet. Es kann im Sinne der Erfindung ebenso gut bevorzugt sein, dass die Messung des elektrischen Gesamtübergangswiderstands in dem unteren, d.h. dem zweiten Strompfad 92 durchgeführt wird, wobei der zweite Strompfad 92 die Werkzeugmaschine 10 mit dem Minuspol 24 der Energieversorgungsvorrichtung 20 verbindet.

Es ist bei der Durchführung der Widerstandsmessungen bevorzugt, dass die Litzen bzw. Messleitungen angelötet oder angeschweißt werden. Die Widerstandsmessungen werden insbesondere ohne zusätzliche Verbindungsmittel, wie Klemmen oder dergleichen, durchgeführt.

## Bezugszeichenliste

| | |
|---|---|
| 10 | Werkzeugmaschine |
| 12 | Verbraucher in der Werkzeugmaschine, z.B Motor |
| 20 | Energieversorgungsvorrichtung |
| 22 | Pluspol der Energieversorgungsvorrichtung |
| 24 | Minuspol der Energieversorgungsvorrichtung |
| 26 | Stromleiter |
| 28 | Energiespeicherzelle |
| 30 | Schnittstelle |
| 32 | Kontaktbereich |
| 40 | weiblicher Kontaktpartner |
| 42 | Verjüngung |
| 44 | Schenkel des weiblichen Kontaktpartners |
| 46 | Einzelkontaktpunkt |
| 50 | männlicher Kontaktpartner |
| 52 | Schwert |
| 60 | Mittel zur Reduzierung einer Relativbewegung |
| 62 | elastisches Element |
| 70 | Einheit aus weiblichem und männlichem Kontaktpartner, Stromübertragungs-Paar |
| 80 | Aufnahmevorrichtung |
| 90 | erstes Strompfad |
| 92 | zweiter Strompfad |
| 94 | Mess-Stromversorgungsvorrichtung |
| 96 | Widerstandsmessgerät |
| 98 | Stromabgriffspunkte |

100    System
110    erste Beschichtung
120    zweite Beschichtung
130    Grundmaterial
140    Oberfläche
150    Mikrostrukturierung
160    Schmiermittel
170    Litzen
180    Überfeder

**Patentansprüche**

1.    System (100) umfassend eine Werkzeugmaschine (10) und eine Energieversorgungsvorrichtung (20) zur Versorgung der Werkzeugmaschine (10) mit elektrischer Energie, wobei die Energieversorgungsvorrichtung (20) über eine Schnittstelle (30) lösbar mit der Werkzeugmaschine (10) verbindbar ist, wobei die Schnittstelle (30) mindestens einen weiblichen Kontaktpartner (40) und einen männlichen Kontaktpartner (50) umfasst, **dadurch gekennzeichnet, dass**
die Schnittstelle (30) einen elektrischen Gesamtübergangswiderstand pro Pol (22, 24) von kleiner als 0,4 Milliohm, bevorzugt kleiner als 0,3 Milliohm und besonders bevorzugt kleiner als 0,2 Milliohm aufweist.

2.    System (100) nach Anspruch 1
**dadurch gekennzeichnet, dass.**
die Schnittstelle (30) pro Pol (22, 24) mindestens sechs, bevorzugt mindestens acht, und besonders bevorzugt mindestens zwölf Einzelkontaktpunkte (46) aufweist.

3.    System (100) nach Anspruch 1 oder 2
**dadurch gekennzeichnet, dass**
mindestens einer der Kontaktpartner (40, 50) eine erste Beschichtung (110) aufweist, wobei ein Silberanteil der ersten Beschichtung (110) in Masseprozent in einem Bereich von größer als 70 %, bevorzugt in einem Bereich von größer als 95 % liegt.

4.    System (100) nach einem der vorhergehenden Ansprüche
**dadurch gekennzeichnet, dass**
mindestens einer der Kontaktpartner (40, 50) eine zweite Beschichtung (120) aufweist, wobei ein Nickelanteil der zweiten Beschichtung (120) in Masseprozent in einem Bereich von größer als 83 % liegt.

5.    System (100) nach Anspruch 4
**dadurch gekennzeichnet, dass**
die zweite Beschichtung (120) dazu eingerichtet ist, eine Haftung der ersten Beschichtung (110) auf einem Grundmaterial (130) des Kontaktpartners (40, 50) zu verbessern.

6.    System (100) nach einem der vorhergehenden Ansprüche
**dadurch gekennzeichnet, dass**
eine Gesamtdicke der ersten Beschichtung (110) und der zweiten Beschichtung (120) in einem Bereich von größer als 4 $\mu$m liegt, bevorzugt in einem Bereich von als größer 8 $\mu$m und am meisten bevorzugt in einem Bereich von größer als 10 $\mu$m.

7.    System (100) nach einem der vorhergehenden Ansprüche
**dadurch gekennzeichnet, dass**
die erste Beschichtung (110) einen Graphitanteil von kleiner als 30 % aufweist.

8.    System (100) nach einem der vorhergehenden Ansprüche
**dadurch gekennzeichnet, dass**
mindestens einer der Kontaktpartner (40, 50) an seiner Oberfläche (140) eine Mikrostrukturierung (150) aufweist, wobei die Mikrostrukturierung (150) eine reduzierte Spitzenhöhe von größer als 0,3 $\mu$m und/oder eine reduzierte Riefentiefe von größer als 0,3 $\mu$m aufweist.

9.    System (100) nach Anspruch 8
**dadurch gekennzeichnet, dass**
sich die Mikrostrukturierung (150) an der Oberfläche (140) des mindestens einen Kontaktpartners (40, 50) periodisch wiederholt.

10.    System (100) nach einem der vorhergehenden Ansprüche
**dadurch gekennzeichnet, dass**
mindestens einer der Kontaktpartner (40, 50) an seiner Oberfläche (140) ein Schmiermittel (160) aufweist, wobei das Schmiermittel (160) einen Ölanteil in Masseprozent von größer als 40 % aufweist.

11.    System (100) nach Anspruch 10
**dadurch gekennzeichnet, dass**
das Schmiermittel (160) zum Verdicken mindestens einen Feststoff aufweist, wobei der Feststoff eine Metallseife und/oder einen Polyharnstoff umfasst.

12.    System (100) nach Anspruch 10 oder 11
**dadurch gekennzeichnet, dass**
das Schmiermittel (160) mindestens ein Additiv zum Verschleißschutz und/oder zur Buntmetalldeaktivierung umfasst.

13.    System (100) nach einem der vorhergehenden Ansprüche
**dadurch gekennzeichnet, dass**
die Schnittstelle (30) mindestens einen elastisch ausgebildeten Stromleiter (26) aufweist.

14.    Energieversorgungsvorrichtung (20) zur Verwendung in dem System nach einem der Ansprüche 1 bis 13

**dadurch gekennzeichnet, dass**

die Energieversorgungsvorrichtung (20) mindestens eine Energiespeicherzelle (28) aufweist, wobei die mindestens eine Energiespeicherzelle einen Innenwiderstand DCR_I von kleiner als 10 Milliohm aufweist.

15. Energieversorgungsvorrichtung (20) zur Verwendung in dem System nach einem der Ansprüche 1 bis 13

**dadurch gekennzeichnet, dass**

die Energieversorgungsvorrichtung (20) mindestens eine Energiespeicherzelle (28) aufweist, wobei die mindestens eine Energiespeicherzelle eine Oberfläche A und ein Volumen V aufweisen, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

Fig. 1

a)

44

46

110, 120

40

180

b)

44

46

140

44

46

44

46

46

110, 120

46

40

c)

32, 46

40

110, 120, 140

44

46

**Fig. 2**

Fig. 3

60, 62

40

40

20

80

40  40

Fig. 4

**Fig. 5**

60, 62

40, 44

32, 42

50, 52

30

70

Fig. 6

Fig. 7

Fig. 8

Fig. 9

Fig. 10

**Fig. 11**

Fig. 12

EP 4 190 505 A1

Fig. 13

40

44

46

46

46

46

150

140

140

70

50, 52

38

Fig. 14

Fig. 15

Fig. 16

Fig. 17

**Fig. 18**

Europäisches Patentamt
European Patent Office
Office européen des brevets

# EUROPÄISCHER RECHERCHENBERICHT

**Nummer der Anmeldung**

**EP 21 21 1571**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 110308 A1 (METABOWERKE GMBH [DE]) 15. September 2016 (2016-09-15) | 1,3-7, 10-15 | INV. B25F5/00 |
| Y | * Absatz [0028]; Ansprüche 1, 12; | 2,13 | |
| A | Abbildung 1 * | 8,9 | |
| | ----- | | |
| A | US 2014/087246 A1 (YAMAMOTO NOBUO [JP] ET AL) 27. März 2014 (2014-03-27) * Absätze [0164], [0165]; Tabelle 1 * | 1-15 | |
| | ----- | | |
| Y | DE 10 2016 120329 A1 (FESTOOL GMBH [DE]) 26. April 2018 (2018-04-26) | 13 | |
| A | * Absatz [0008]; Abbildungen 6-11 * | 1-12,14, 15 | |
| | ----- | | |
| Y | US 2019/259984 A1 (NISHIKAWA TOMOMASA [JP] ET AL) 22. August 2019 (2019-08-22) | 2,13 | |
| A | * Absätze [0262], [0273], [0277], [0319], [0320], [0322], [0340]; Abbildungen 12-15, 39-75 * | 1,3-12, 14,15 | |
| | ----- | | **RECHERCHIERTE SACHGEBIETE (IPC)** |
| Y | CN 112 670 723 A (NANJING CHERVON IND CO LTD) 16. April 2021 (2021-04-16) | 13 | |
| A | * Absätze [0056], [0062]; Abbildungen 2, 11, 18, 22 * | 1-12,14, 15 | B25F B25H H01M H02J |
| | ----- | | |

Der vorliegende Recherchenbericht wurde für alle Patentansprüche erstellt

| Recherchenort | Abschlußdatum der Recherche | Prüfer |
|---|---|---|
| **München** | **24. Mai 2022** | **Kirner, Katharina** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 21 1571

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-05-2022

| Im Recherchenbericht angeführtes Patentdokument | Datum der Veröffentlichung | Mitglied(er) der Patentfamilie | Datum der Veröffentlichung |
|---|---|---|---|
| DE 102015110308 A1 | 15-09-2016 | KEINE | |
| US 2014087246 A1 | 27-03-2014 | CN 103548183 A | 29-01-2014 |
| | | JP 5482965 B2 | 07-05-2014 |
| | | JP WO2012160681 A1 | 31-07-2014 |
| | | KR 20140004780 A | 13-01-2014 |
| | | US 2014087246 A1 | 27-03-2014 |
| | | WO 2012160681 A1 | 29-11-2012 |
| DE 102016120329 A1 | 26-04-2018 | AU 2017351400 A1 | 02-05-2019 |
| | | CN 110024228 A | 16-07-2019 |
| | | DE 102016120329 A1 | 26-04-2018 |
| | | DE 112017005373 A5 | 11-07-2019 |
| | | EP 3516740 A1 | 31-07-2019 |
| | | JP 2019536252 A | 12-12-2019 |
| | | KR 20190066021 A | 12-06-2019 |
| | | US 2019334302 A1 | 31-10-2019 |
| | | WO 2018077683 A1 | 03-05-2018 |
| US 2019259984 A1 | 22-08-2019 | AU 2017348744 A1 | 23-05-2019 |
| | | CA 3042159 A1 | 03-05-2018 |
| | | CN 109891621 A | 14-06-2019 |
| | | CN 114430088 A | 03-05-2022 |
| | | EP 3534428 A1 | 04-09-2019 |
| | | JP 6863388 B2 | 21-04-2021 |
| | | JP 2021101431 A | 08-07-2021 |
| | | JP WO2018079722 A1 | 19-09-2019 |
| | | US 2019259984 A1 | 22-08-2019 |
| | | WO 2018079722 A1 | 03-05-2018 |
| CN 112670723 A | 16-04-2021 | KEINE | |

EPO FORM P0461

Für nähere Einzelheiten zu diesem Anhang : siehe Amtsblatt des Europäischen Patentamts, Nr.12/82